# EUROPÄISCHE PATENTANMELDUNG

(11) **EP 2 508 472 A2**
(43) Veröffentlichungstag der Anmeldung: **10.10.2012**
(21) Anmeldenummer: 12003939.1
(22) Anmeldetag: 20.09.2007
(51) Int. Cl.: B82Y 30/00, C01B 31/02

(54) **Dispergierverfahren und auf diese Weise hergestellte Dispersionen sowie deren Verwendung**

(30) Priorität: 14.11.2006 DE 102006053816; 21.11.2006 DE 102006055106
(62) Teilanmeldung aus: 07818283.9
(71) Anmelder: Byk-Chemie GmbH, 46483 Wesel (DE)
(72) Erfinder: Berkei, Michael, Dr., 45721 Haltern am See (DE); Nolte, Ulrich, Dr., 47533 Kleve (DE); Sawitowski, Thomas, Dr., 46483 Wesel (DE); Pritschins, Wolfgang, 46487 Wesel (DE)
(74) Vertreter: Strehlke, Ingo Kurt

(57) **Zusammenfassung**

Die Erfindung betrifft ein Verfahren zum Dispergieren von Kohlenstoffnanoröhren (CNTs) in einer kontinuierlichen Phase, insbesondere in mindestens einem Dispersionsmittel, wobei die Kohlenstoffnanoröhren, insbesondere ohne vorangehende Vorbehandlung, in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags dispergiert werden, sowie die auf diese Weise erhältlichen Dispersionen und deren Verwendung. Mit dem erfindungsgemäßen Verfahren lassen sich die Kohlenstoffnanoröhren (CNTs) in großen Konzentrationen und mit großer Lagerstabilität dispergieren.

## Beschreibung

Die vorliegende Erfindung betrifft ein Verfahren zum Dispergieren von Kohlenstoffnanoröhren (CNTs) in einer kontinuierlichen Phase, insbesondere in mindestens einem Dispersionsmittel, sowie die auf diese Weise erhältlichen Dispersionen selbst und deren Verwendung.

Kohlenstoffnanoröhren, synonym auch als Kohlenstoffnanotubes (engl. carbon nanotubes = CNTs) etc. bezeichnet, sind mikroskopisch kleine röhrenförmige Gebilde (d. h. molekulare Nanoröhren) aus Kohlenstoff. Ihre Wände bestehen ― wie die der Fullerene oder wie die Ebenen des Graphits ― im wesentlichen ausschließlich aus Kohlenstoff, wobei die Kohlenstoffatome eine wabenartige Struktur mit Sechsecken und jeweils drei Bindungspartnern einnehmen, welche durch die sp²-Hybridisierung der Kohlenstoffatome vorgegeben ist.

Kohlenstoffnanoröhren leiten sich somit von den Kohlenstoffebenen des Graphits ab, welche sozusagen zu einer Röhre aufgerollt sind: Die Kohlenstoffatome bilden eine wabenartige, hexagonale Struktur und jeweils drei Bindungspartnern. Röhren mit ideal hexagonaler Struktur haben eine einheitliche Dicke und sind linear; es sind aber auch geknickte oder sich verengende Röhren möglich, die fünfeckige Kohlenstoffringe enthalten. Je nachdem, wie das Wabennetz des Graphits zur Röhre gerollt wird ("gerade" oder "schräg"), entstehen helikale (d. h. schraubenartig gewundene) und auch nichtspiegelsymmetrische, also chirale Strukturen.

Man unterscheidet zwischen einwandigen Kohlenstoffnanoröhren (engl. single-wall carbon nanotubes = SWCNTs bzw. SWNTs) und mehrwandigen Kohlenstoffnanoröhren (engl. multiwall carbon nanotubes = MWCNTs bzw. MWNTs), zwischen offenen oder geschlossenen Kohlenstoffnanoröhren (d. h. mit einem "Deckel", der z. B. einen Ausschnitt aus einer Fullerenstruktur hat) sowie zwischen leeren und gefüllten (beispielsweise mit Silber, flüssigem Blei, Edelgasen etc.) Kohlenstoffnanoröhren.

Der Durchmesser der Kohlenstoffnanoröhren (CNTs) liegt im Bereich von wenigen Nanometern (z. B. 1 bis 50 nm), aber es wurden auch schon Kohlenstoffnanoröhren (CNTs) mit Durchmessern der Röhren von nur 0,4 nm hergestellt. Längen von mehreren Mikrometern bis Millimetern für einzelne Röhren und bis zu einigen Zentimetern für Röhrenbündel wurden bereits erreicht.

Je nach Detail der Struktur ist die elektrische Leitfähigkeit innerhalb der Kohlenstoffnanoröhren metallisch oder halbleitend. Es sind auch Kohlenstoffnanoröhren bekannt, welche bei tiefen Temperaturen supraleitend sind.

Es wurden bereits Transistoren und einfache Schaltungen mit halbleitenden Kohlenstoffnanoröhren hergestellt. Auch wurde bereits versucht, komplexe Schaltkreise aus verschiedenen Kohlenstoffnanoröhren gezielt herzustellen.

Die mechanischen Eigenschaften von Kohlenstoffnanoröhren sind überragend: CNTs haben ― bei einer Dichte von z. B. 1,3 bis 1,4 g/cm³ ― eine enorme Zugfestigkeit von mehreren Megapascal; im vergleich hierzu hat Stahl bei einer Dichte von mindestens 7,8 g / cm³ eine maximale Zugfestigkeit von nur etwa 2 MPa, woraus sich für einzelne CNTs rechnerisch ein mindestens 135mal besseres Verhältnis von Zugfestigkeit zu Dichte als für Stahl ergibt.

Für den Bereich der Elektronik sind vor allem die Strombelastbarkeit und die elektrische wie Wärmeleitfähigkeit interessant: Die Strombelastbarkeit liegt schätzungsweise 1000mal höher als bei Kupferdrähten, während die Wärmeleitfähigkeit bei Raumtemperatur beinahe doppelt so hoch wie die von Diamant ist. Da CNTs auch Halbleiter sein können, lassen sich aus ihnen hervorragende Transistoren fertigen, die höhere Spannungen und Temperaturen ― und damit höhere Taktfrequenzen ― als Siliziumtransistoren aushalten; funktionsfähige Transistoren aus CNTs wurden bereits hergestellt. Des weiteren können mit Hilfe von CNTs nichtflüchtige Speicher realisiert werden. Auch können CNTs im Bereich der Meßtechnik (z. B. Rastertunnelmikroskope) verwendet werden.

Aufgrund ihrer mechanischen und elektrischen Eigenschaften können Kohlenstoffnanoröhren auch in Kunststoffen Anwendung finden: Dadurch werden beispielsweise die mechanischen Eigenschaften der Kunststoffe stark verbessert. Außerdem ist es möglich, auf diese Weise elektrisch leitende Kunststoffe herzustellen.

Kohlenstoffnanoröhren (CNTs) sind kommerziell verfügbar und werden von verschiedenen Herstellern angeboten (z. B. von der Bayer MaterialScience AG, Deutschland, der CNT Co. Ltd., China, der Cheap Tubes Inc., USA, und der Nanocyl S.A., Belgien). Entsprechende Herstellungsverfahren sind dem Fachmann geläufig. So lassen sich Kohlenstoffnanoröhren (CNTs) beispielsweise durch Lichtbogenentladung z. B. zwischen Kohlenstoffelektroden, ausgehend von Graphit mittels Laserabtragung ("Verdampfen") oder durch katalytische Zersetzung von Kohlenwasserstoffen (engl. *chemical vapor deposition,* kurz CVD) herstellen.

Die zuvor beschriebenen Eigenschaften der Kohlenstoffnanoröhren (CNTs) und die hieraus erwachsenden Anwendungsmöglichkeiten haben ein großes Interesse hervorgerufen. Insbesondere besteht für eine Reihe von Anwendungen ein Bedarf, die Kohlenstoffnanoröhren (CNTs) in gut handhabbarer Form, vorzugsweise in Form von Dispersionen, zur Verfügung zu stellen.

Das Dispergieren von Kohlenstoffnanoröhren (CNTs) stellt eine große Herausforderung dar, da die Kohlenstoffnanoröhren (CNTs) sich nur sehr schwer in stabile Dispersionen überführen lassen, insbesondere weil die Kohlenstoffnanoröhren (CNTs) über ein sehr großes Aspektverhältnis verfügen und stark agglomeriert und/oder verknäult vorliegen.

Daher hat es im Stand der Technik nicht an Versuchen gefehlt, Kohlenstoffnanoröhren (CNTs) stabil zu dispergieren. Die aus dem Stand der Technik bekannten Verfahren sind aber nur wenig geeignet, um stabile und konzentrierte Dispersionen von Kohlenstoffnanoröhren (CNTs) zu erzeugen: Meist führen die Verfahren des Standes der Technik nicht zu lagerstabilen Dispersionen, und zudem ist in den meisten Fällen die Konzentration an Kohlenstoffnanoröhren (CNTs) in den Dispersionen des Standes der Technik nur äußerst gering.

So zielen einige Verfahren des Standes der Technik darauf ab, durch eine aufwendige vorangehende Vorbehandlung zunächst die Oberfläche der zu dispergierenden Kohlenstoffnanoröhren (CNTs) zu modifizieren, insbesondere polar auszustatten, um die nachfolgende Dispergierung zu erleichtern. Für die Modifizierung der Kohlenstoffnanoröhren (CNTs) geeignete Verfahren sind beispielsweise oxidative Prozesse, insbesondere chemische Vorbehandlung, Halogenierung oder andere Polarisierungsprozesse zur Modifizierung der Oberflächen der Kohlenstoffnanoröhren (CNTs). Ein derartiges Verfahren, welches beispielsweise eine vorangehende Fluorierung der Oberflächen der Kohlenstoffnanoröhren (CNTs) vor deren Dispergierung vorsieht, ist beispielsweise in der US 6 827 918 B2 beschrieben.

Nachteilig bei diesen Verfahren ist die aufwendige Vorbehandlung, die insbesondere bei großtechnischer Umsetzung zu einer erschwerten Durchführung des Verfahrens mit deutlich höheren Kosten führt.

Auch sind im Stand der Technik Verfahren beschrieben worden, welche die Kohlenstoffnanoröhren in Gegenwart eines wasserlöslichen Polymermaterials in wäßrige Dispersionen überführen (vgl. z. B. US 2004/0131859 A1 und WO 02/076888 A1). Diese Verfahren haben aber den Nachteil, daß sie zum einen nicht universell einsetzbar sind, sondern auf wäßrige Dispersionsmittel bzw. wäßrige Dispersionsmedien beschränkt sind, und zum anderen, daß sie nur zu Dispersionen mit relativ geringen Gehalten an Kohlenstoffnanoröhren (CNTs) führen. Vorherrschende Zielsetzung der beiden vorgenannten Druckschriften ist vielmehr die Überführung der dort beschriebenen Dispersionen in ein redispergierbares Pulver von Kohlenstoffnanoröhren (CNTs).

Die zuvor beschriebenen Verfahren des Standes der Technik resultieren zumeist in inhomogenen, oftmals nicht langzeitstabilen Dispersionen von Kohlenstoffnanoröhren (CNTs) mit geringen Konzentrationen bzw. Gehalten von CNTs. Weiterhin zeigen die Dispersionen des Standes der Technik ― im Vergleich zum reinen Dispersionsmittel bzw. Dispersionsmedium ― einen hohen bis extremen Anstieg in der Viskosität bei zugleich nur geringen Partikelgehalten von Kohlenstoffnanoröhren (CNTs) von nur bis zu ca. 1 Gew.-%.

Diese Dispersionen des Standes der Technik sind in bezug auf eine industrielle Umsetzung mit großem Nachteil verbunden, so daß eine erhöhte Nachfrage nach verbesserten Dispersionen von Kohlenstoffnanoröhren (CNTs) in verschiedenen Medien besteht.

Der vorliegenden Erfindung liegt daher die Aufgabe zugrunde, ein Verfahren zur Herstellung von Dispersionen von Kohlenstoffnanoröhren (CNTs) bereitzustellen, wobei insbesondere die zuvor geschilderten, mit dem Stand der Technik verbundenen Nachteile zumindest weitgehend vermieden oder aber wenigstens abgeschwächt werden sollen.

Eine weitere Aufgabe der vorliegenden Erfindung ist die Bereitstellung von Dispersionen von Kohlenstoffnanoröhren (CNTs) mit im Vergleich zu den entsprechenden Dispersionen des Standes der Technik verbesserten Eigenschaften, insbesondere mit erhöhten Lagerstabilitäten und/oder mit höheren Gehalten an Kohlenstoffnanoröhren (CNTs), vorzugsweise bei guter Handhabbarkeit, wie guter Fließfähigkeit etc.

Die Anmelderin hat nun überraschenderweise gefunden, daß die zuvor geschilderte Problemstellung in effizienter Weise gelöst werden kann, wenn die Kohlenstoffnanoröhren (CNTs) in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags in Dispersion gebracht werden.

In vollkommen überraschender Weise wurde nun nämlich gefunden, daß durch die Kombination eines geeigneten Dispergiermittels (Dispergators) in Zusammenwirken mit hohen Energieeinträgen, insbesondere hohen Scherkräften, ein schonendes und kostengünstiges Verfahren bereitgestellt werden kann, um Kohlenstoffnanoröhren (CNTs) in deutlich höheren Konzentrationen und in einer Vielzahl von Dispersionsmitteln bzw. Dispersionsmedien stabil zu dispergieren.

Zur Lösung des zuvor geschilderten Problems schlägt die vorliegende Erfindung somit ein Dispergierverfahren nach Anspruch 1 vor. Weitere, vorteilhafte Eigenschaften des erfindungsgemäßen Verfahrens sind Gegenstand der diesbezüglichen Verfahrensunteransprüche.

Weiterer Gegenstand der vorliegenden Erfindung sind die nach dem erfindungsgemäßen Verfahren erhältlichen Dispersionen von Kohlenstoffnanoröhren (CNTs), wie sie in den entsprechenden, auf die Dispersionen selbst gerichteten Ansprüchen beschrieben bzw. definiert sind.

Schließlich ist ein weiterer Gegenstand der vorliegenden Erfindung die Verwendung der nach dem erfindungsgemäßen Verfahren erhältlichen Dispersionen von Kohlenstoffnanoröhren (CNTs), wie sie in den entsprechenden Verwendungsansprüchen beschrieben bzw. definiert ist.

Gegenstand der vorliegenden Erfindung ― gemäß einem **ersten** Aspekt der vorliegenden Erfindung ― ist somit ein Verfahren zum Dispergieren von Kohlenstoffnanoröhren (CNTs) in einer kontinuierlichen Phase, insbesondere in mindestens einem Dispersionsmittel, d. h. also ein Verfahren zum Herstellen von Dispersionen von Kohlenstoffnanoröhren (CNTs) in einer kontinuierlichen Phase, insbesondere in mindestens einem Dispersionsmittel, wobei die Kohlenstoffnanoröhren (CNTs), insbesondere ohne vorangehende Vorbehandlung der Kohlenstoffnanoröhren (CNTs), in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags dispergiert werden.

Zum Begriff der Dispersion, wie er im Rahmen der vorliegenden Erfindung verwendet wird, kann insbesondere auf DIN 53900 vom Juli 1972 verwiesen werden, wonach der Begriff der Dispersion eine Bezeichnung für ein System (d. h. disperses System) aus mehreren Phasen ist, von denen eine Phase kontinuierlich ausgebildet ist (nämlich das Dispersionsmittel oder Dispersionsmedium) und mindestens eine weitere Phase feinverteilt ist (nämlich die dispergierte Phase oder das Dispergens, hier: die Kohlenstoffnanoröhren). Im Rahmen der vorliegenden Erfindung wird der Begriff der Dispersion ausschließlich zur Bezeichnung von Suspensionen, d. h. Dispersionen von unlöslichen Feststoffteilchen in Flüssigkeiten, bezeichnet.

Der Begriff des Dispergiermittels - synonym auch als Dispergator, Dispergieradditiv, Netzmittel etc. bezeichnet -, wie er im Rahmen der vorliegenden Erfindung verwendet wird, bezeichnet im allgemeinen Substanzen, welche das Dispergieren von Teilchen in einem Dispersionsmittel bzw. Dispersionsmedium erleichtern, insbesondere indem die Grenzflächenspannung zwischen den beiden Komponenten ― zu dispergierende Teilchen einerseits und Dispergiermittel andererseits ― erniedrigt wird, also eine Benetzung herbeigeführt wird. Infolgedessen sind eine Vielzahl von synonymen Bezeichnungen für Dispergiermittel (Dispergatoren) in Gebrauch, z. B. Dispergieradditiv, Absetzverhinderungsmittel, Netzmittel, Detergens, Suspendier- bzw. Dispergierhilfsmittel, Emulgator etc. Der Begriff des Dispergiermittels ist nicht zu verwechseln mit dem Begriff des Dispersionsmittels, weil letzteres die kontinuierliche Phase der Dispersion (d. h. das flüssige, kontinuierliche Dispersionsmedium) bezeichnet. Im Rahmen der vorliegenden Erfindung dient das Dispergiermittel zudem auch dem Zweck, die dispergierten Partikel (d. h. die Kohlenstoffnanoröhren) zu stabilisieren, d. h. stabil in Dispersion zu halten, und in effizienter Weise deren Reagglomeration zu vermeiden bzw. wenigstens zu minimieren; dies wiederum führt zu den gewünschten Viskositäten der resultierenden Dispersionen, da auf diese Weise in der Praxis gut handhabbare, fließfähige Systeme resultieren ― und dies selbst bei hohen Konzentrationen der dispergierten Kohlenstoffnanoröhren. Ohne die Verwendung des Dispergiermittels dagegen würde infolge einer unerwünschten Reagglomeration der dispergierten CNTs ein derartiger Viskositätsanstieg der erhaltenen Dispersionen resultieren, daß ―zumindest bei höheren CNT-Konzentrationen ― in der Praxis nicht mehr handhabbare, da zu hochviskose bzw. zu geringfügig fließfähige Systeme resultieren würden.

Für weitergehende Einzelheiten zu den Begriffen "Dispergens", "Dispergieren", "Dispergiermittel", "Disperse Systeme" und "Dispersion" kann beispielsweise auf Römpp Chemielexikon, 10. Auflage, Georg Thieme Verlag, Stuttgart/New York, Band 2, 1997, Seiten 1014/1015, sowie die dort referierte Literatur, deren gesamter Offenbarungsgehalt bzw. Inhalt hiermit durch Bezugnahme eingeschlossen ist, verwiesen werden.

Eine Besonderheit des erfindungsgemäßen Verfahrens ist darin zu sehen, daß erfindungsgemäß der Dispergiervorgang unter ausreichendem Energieeintrag (z. B. Scherenergieeintrag) erfolgt, wobei die eingetragene Energie einerseits ausreichend sein muß, um die für die Dispergierung erforderliche Energie bereitzustellen, insbesondere die von den Kohlenstoffnanoröhren (CNTs) gebildeten Agglomerate, Konglomerate, Knäuel etc. aufzubrechen, aber andererseits einen gewissen Wert nicht überschreiten darf, oberhalb dessen eine Zerstörung der Kohlenstoffnanoröhren (CNTs) einsetzt ― und dies in Gegenwart eines geeigneten Dispergiermittels (Dispergators), welches imstande ist, die einzelnen Kohlenstoffnanoröhren (CNTs) zu stabilisieren und eine erneute Reagglomerierung zu verhindern und zum anderen die nachfolgende Dispergierung zu erleichtern und auf diese Weise die resultierenden Dispersionen zu stabilisieren.

Mit dem erfindungsgemäßen Verfahren lassen sich in überraschender Weise relativ hohe Konzentrationen an Kohlenstoffnanoröhren (CNTs) in den resultierenden Dispersionen erhalten. Insbesondere lassen sich mit dem erfindungsgemäßen Verfahren Dispersionen mit Feststoffgehalten an Kohlenstoffnanoröhren (CNTs) von 5 Gew.-% und mehr, bezogen auf die resultierenden Dispersionen, herstellen. Im allgemeinen werden die Kohlenstoffnanoröhren (CNTs) in Mengen von 1 • 10⁻⁵ bis 30 Gew.-%, insbesondere 1 • 10⁻⁴ bis 20 Gew.-%, vorzugsweise 1 • 10⁻³ bis 10 Gew.-%, besonders bevorzugt 1 • 10⁻² bis 7,5 Gew.-%, ganz besonders bevorzugt 1 • 10⁻¹ bis 5 Gew.-%, bezogen auf die resultierenden Dispersionen, in der kontinuierlichen Phase dispergiert.

Um eine wirtschaftlich sinnvolle Anwendung zu ermöglichen, sollte das erfindungsgemäße Verfahren innerhalb eines gewissen bzw. relativ kurzen Zeitraums durchgeführt bzw. abgeschlossen sein, was wiederum einen bestimmten Energieeintrag pro Zeiteinheit erfordert. Im allgemeinen wird das erfindungsgemäße Verfahren bzw. der Dispergiervorgang in einer Zeitdauer von 0,01 bis 30 Minuten, insbesondere 0,1 bis 20 Minuten, vorzugsweise 0,2 bis 15 Minuten, besonders bevorzugt 0,5 bis 10 Minuten, ganz besonders bevorzugt 0,5 bis 5 Minuten, durchgeführt. Dennoch kann es einzelfallbedingt oder anwendungsbezogen erforderlich sein, von den vorgenannten Werten abzuweichen, ohne daß der Rahmen der vorliegenden Erfindung verlassen ist.

Wie zuvor geschildert, muß zur Durchführung des Dispergiervorgangs ein ausreichender Energieeintrag in das Dispersionsmedium erfolgen, welcher einerseits ausreichend sein muß, um eine zuverlässige Dispergierung der Kohlenstoffnanoröhren (CNTs) zu gewährleisten, und andererseits nicht derart hoch sein darf, daß eine Zerstörung der Kohlenstoffnanoröhren (CNTs) bzw. ihrer Strukturen eintritt.

Die Bereitstellung des erforderlichen Energieeintrags erfolgt vorzugsweise mittels Ultraschallbehandlung. Dennoch sind auch andere Möglichkeiten im Rahmen der vorliegenden Erfindung realisierbar, beispielsweise die Anwendung von Hochdruckdüsen, obwohl die Behandlung mittels Ultraschall erfindungsgemäß bevorzugt ist.

Im allgemeinen kann die eingetragene Energiemenge in weiten Bereichen variieren. Insbesondere beträgt die eingetragene Energiemenge, berechnet als eingetragene Energie pro Menge an zu dispergierenden Kohlenstoffnanoröhren (CNTs), 5.000 bis 500.000 kJ/kg, insbesondere 10.000 bis 250.000 kJ/kg, vorzugsweise 15.000 bis 100.000 kJ/kg, besonders bevorzugt 25.000 bis 50.000 kJ/kg. Dennoch kann es anwendungsbezogen oder einzelfallbedingt erforderlich sein, von den vorgenannten Werten abzuweichen, ohne daß der Rahmen der vorliegenden Erfindung verlassen ist.

Üblicherweise geht dem eigentlichen Dispergiervorgang ein Verfahrensschritt voraus, bei dem die nachfolgend zu dispergierenden Kohlenstoffnanoröhren (CNTs) mit der kontinuierlichen Phase, insbesondere mit dem Dispersionsmittel, und dem Dispergiermittel (Dispergator) sowie gegebenenfalls weiteren Bestandteilen bzw. Inhaltsstoffen der Dispersion in Kontakt gebracht und miteinander homogenisiert werden, insbesondere unter entsprechendem Energieeintrag, vorzugsweise unter Rühren. Der hierfür erforderliche Energieeintrag ist jedoch geringer als für den Dispergiervorgang als solchen, so daß ein üblicher Rühr- bzw. Mischvorgang hierfür ausreichend ist.

Im allgemeinen wird das erfindungsgemäße Verfahren bei Temperaturen unterhalb der Siedetemperatur der kontinuierlichen Phase, insbesondere des Dispersionsmittels, durchgeführt. Vorzugsweise wird das erfindungsgemäße Verfahren bei Temperaturen im Bereich von 10 bis 100 °C, vorzugsweise 15 bis 70 °C, durchgeführt. Dabei kann es gegebenenfalls erforderlich werden, den Dispergiervorgang unter Kühlen durchzuführen, da durch den Energieeintrag eine Erwärmung der resultierenden Dispersion eintritt.

Wie zuvor geschildert, ist ein Vorteil der vorliegenden Erfindung darin zu sehen, daß der Dispergiervorgang ohne vorangehende Vorbehandlung der zu dispergierenden Kohlenstoffnanoröhren (CNTs), insbesondere ohne vorangehende Oxidation, chemische Behandlung (z. B. mit Oxidationsmitteln, wie Salpetersäure, Ozon etc.), thermische Behandlung, Polarisierung, Halogenierung oder dergleichen, durchgeführt wird.

Im Rahmen des erfindungsgemäßen Verfahrens lassen sich nahezu beliebige Kohlenstoffnanoröhren (CNTs) einsetzen, wie sie nach aus dem Stand der Technik bekannten Verfahren hergestellt werden können oder aber als handelsübliche Produkte erhältlich sind (z. B. von der Bayer MaterialScience AG, Leverkusen).

Die erfindungsgemäß eingesetzten Kohlenstoffnanoröhren (CNTs) können beispielsweise einwandige Kohlenstoffnanoröhren (Single-Wall Carbon Nanotubes = SWCNT bzw. SWNT) oder mehrwandige Kohlenstoffnanoröhren (Multi-Wall Carbon Nanotubes = MWCNT bzw. MWNT), insbesondere 2- bis 30wandige, vorzugsweise 3- bis 15wandige Kohlenstoffnanoröhren, sein.

Die erfindungsgemäß eingesetzten Kohlenstoffnanoröhren (CNTs) können mittlere Innendurchmesser von 0,4 bis 50 nm, insbesondere 1 bis 10 nm, vorzugsweise 2 bis 6 nm, und/oder mittlere Außendurchmesser von 1 bis 60 nm, insbesondere 5 bis 30 nm, vorzugsweise 10 bis 20 nm, aufweisen. Die erfindungsgemäß eingesetzten Kohlenstoffnanoröhren (CNTs) können mittlere Längen von 0,01 bis 1.000 µm, insbesondere 0,1 bis 500 µm, vorzugsweise 0,5 bis 200 µm, besonders bevorzugt 1 bis 100 µm, aufweisen.

Ferner können die erfindungsgemäß eingesetzten Kohlenstoffnanoröhren (CNTs) eine Zugfestigkeit pro Kohlenstoffnanoröhre von mindestens 1 GPa, insbesondere mindestens 5 GPa, bevorzugt mindestens 10 GPa, und/oder einen Elastizitätsmodul pro Kohlenstoffnanoröhre von mindestens 0,1 TPa, insbesondere mindestens 0,5 TPa, bevorzugt mindestens 1 TPa, und/oder eine thermische Leitfähigkeit von mindestens 500 W/mK, insbesondere mindestens 1.000 W/mK, bevorzugt mindestens 2.000 W/mK, und/oder eine elektrische Leitfähigkeit von mindestens 10³ S/cm, insbesondere mindestens 0,5 • 10⁴ S/cm, bevorzugt mindestens 10⁴ S/cm, aufweisen.

Üblicherweise eingesetzte Kohlenstoffnanoröhren (CNTs) weisen eine Schüttdichte im Bereich von 0,01 bis 0,3 g/cm³, insbesondere 0,02 bis 0,2 g/cm³, vorzugsweise 0,1 bis 0,2 g/cm³, auf und liegen als Agglomerate bzw. Konglomerate einer Vielzahl von Kohlenstoffnanoröhren (CNTs), insbesondere in stark verknäulter Form, vor.

Erfindungsgemäß geeignete Kohlenstoffnanoröhren (CNTs) sind handelsverfügbar, beispielsweise über die Bayer MaterialScience AG, Leverkusen, beispielsweise die Produktserie Baytubes (z. B. Baytubes® C 150 P).

Was die kontinuierliche Phase bzw. das Dispersionsmittel (Dispersionsmedium) anbelangt, so können im Rahmen der vorliegenden Erfindung grundsätzlich wäßrig basierte, organisch basierte oder wäßrig-organisch basierte Dispersionsmittel zum Einsatz kommen, wobei organische Dispersionsmittel bevorzugt eingesetzt werden. Üblicherweise wird als kontinuierliche Phase ein unter Dispergierbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Dispersionsmittel eingesetzt.

In erfindungsgemäß bevorzugter Weise wird als kontinuierliche Phase ein Dispersionsmittel eingesetzt, welches ausgewählt wird aus der Gruppe (i) Alkoholen, insbesondere geradkettigen, verzweigten oder cyclischen, einwertigen oder mehrwertigen Alkoholen, wie Methanol, Ethanol, Butanol, Ethylhexanol, Dekanol, Isotridecylalkohol, Benzylalkohol, Propargylalkohol, Oleylalkohol, Linoleylalkohol, Oxoalkoholen, Neopentylalkohol, Cyclohexanol, Fettalkoholen und Di-und Polyolen, wie Glykolen; (ii) Etheralkoholen, wie 2-Methoxyethanol, Monophenyldiglykol, Phenylethanol, Ethylenglykol und Propylenglykol; (iii) Kohlenwasserstoffen, wie Toluol, Xylol und aliphatischen und/oder cyloaliphatischen Benzinfraktionen, chlorierten Kohlenwasserstoffen, wie Chloroform und Trichlorethan; (iv) Ethern, insbesondere cyclischen und acyclischen Ethern, wie Dioxan, Tetrahydrofuran und Polyalkylenglykoldialkylethern; (v) Carbonsäureestem, insbesondere Monocarbonsäureestern, wie Ethylacetat und Butylacetat, und Di- oder Polycarbonsäureestern, wie Dialkylestern von C₂- bis C₄-Dicarbonsäuren ("Dibasic Esters"); (vi) Etherestern, insbesondere Alkylglykolestern, wie Ethylglykolacetat und Methoxypropylacetat; (vii) Lactonen, wie Butyrolacton; (viii) Weichmachern, insbesondere Phthalaten; (ix) Aldehyden und Ketonen, wie Methylisobutylketon, Cyclohexanon und Aceton; (x) Säureamiden, wie Dimethylformamid; (xi) N-Methylpyrrolidon; sowie Mischungen der vorgenannten Dispersionsmittel.

Darüber hinaus können grundsätzlich auch ionische Flüssigkeiten oder sogenannte superkritische Flüssigkeiten ("*supercritical fluids*") als Dispersionsmittel bzw. Dispersionsmedium zum Einsatz kommen. Auch Wasser kommt im Rahmen der vorliegenden Erfindung als Dispersionsmittel in Betracht.

Was das erfindungsgemäß eingesetzte Dispergiermittel anbelangt, so handelt es sich insbesondere um ein polymeres Dispergiermittel, insbesondere ein polymeres Dispergiermittel auf Basis eines funktionellen Polymers, vorzugsweise mit einer zahlenmittleren Molekularmasse von mindestens 500 g/mol, vorzugsweise mindestens 1.000 g/mol, bevorzugt mindestens 2.000 g/mol. Insbesondere kann das erfindungsgemäß eingesetzte Dispergiermittel ausgewählt sein aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder gegebenenfalls versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Mischungen.

Darüber hinaus können als erfindungsgemäß geeignete Dispergiermittel grundsätzlich alle dem Fachmann zu diesem Zweck bekannten Netzmittel, Tenside, Dispergiermittel etc. verwendet werden.

In erfindungsgemäß bevorzugter Weise werden als Dispergiermittel insbesondere solche Verbindungen ausgewählt, wie sie in den Druckschriften EP 1 593 700 B1, EP 0 154 678 B1, EP 0 318 999 B1, EP 0 270 126 B1, EP 0 893 155 B1, EP 0 417 490 B1, EP 1 081 169 B1, EP 1 650 246 A1, EP 1 486 524 A1, EP 1 640 389 A1, EP 0 879 860 B1, WO 2005/097872 A 1 und EP 1 416 019 A 1 beschrieben sind, deren jeweiliger Offenbarungsgehalt hiermit in vollem Umfang durch Bezugnahme eingeschlossen ist. Diese Verbindungen sind in den Ansprüchen 13 bis 17 (= EP 1 593 700 B1), Anspruch 18 (= EP 0 154 678 B1), Anspruch 19 (= EP 0 318 999 B1), Anspruch 20 (= EP 0 270 126 B1), Anspruch 21 (= EP 0 893 155 B1), Anspruch 22 (= EP 0 417 490 B1), Anspruch 23 (= EP 1 081 169 B1), Anspruch 24 (= EP 1 650 246 A1), Anspruch 25 (= EP 1 486 524 A1), Anspruch 26 (= EP 1 640 389 A1), Anspruch 27 (= EP 0 879 860 B1), Anspruch 28 (= WO 2005/097872 A1) und Anspruch 29 (= EP 1 416 019 A1) näher definiert bzw. beschrieben.

Was das erfindungsgemäße Verfahren anbelangt, so ist dieses grundsätzlich in kontinuierlichem wie im diskontinuierlichen Betrieb durchführbar, und dies mit relativ geringem Zeitaufwand. Aufgrund seiner geringen Komplexität ist das erfindungsgemäße Verfahren ohne weiteres industriell einsetzbar, flexibel und wirtschaftlich durchführbar und bis zur Produktion im Tonnenmaßstab anpaßbar ausgestaltet.

Grundsätzlich ist das erfindungsgemäße Verfahren für verschiedenste Dispersionsmittel bzw. Dispersionsmedien, verschiedenste Dispergiermittel bzw. Dispergatoren und verschiedenste Kohlenstoffnanoröhren (CNTs) anwendbar und ohne weiteres mit weiteren Prozessen bzw. Prozeßschritten kombinierbar.

Wie eingangs geschildert, stellt das Dispergieren von CNTs eine große Herausforderung dar, da die CNTs über ein sehr großes Aspektverhältnis verfügen und stark verknäult vorliegen: So bewegen sich die Durchmesser beispielsweise im Bereich von 3 bis 25 nm, die Längen jedoch beispielsweise bis zu ca. 10 mm. Aufgrund des hohen Verknäulungsgrades sind sehr hohe Energieeinträge bzw. Scherkräfte notwendig, um die CNTs zu separieren. Erfolgt das Entknäulen nur durch hohen Energieeintrag ohne gleichzeitigen Einsatz geeigneter Dispergiermittel, so werden die CNTs nur zerkleinert und nicht ausreichend stabilisiert, so daß nichtlangzeitstabile inhomogene Dispersionen resultieren. Der Einsatz von Dispergiermitteln dient zum einen dem Benetzen der CNTs, um ein leichteres und schonenderes Entknäulen zu gewährleisten, und zum anderen dem Stabilisieren der so erhaltenen separierten CNTs durch Belegung mit dem Dispergiermittel, so daß man mit dem erfindungsgemäßen Verfahren stabile homogene Dispersionen erhält. Idealerweise zeigen die Dispersionen nur einen geringen Anstieg in der Viskosität und eine hohe Wirksamkeit der CNTs.

Dagegen resultieren die im Stand der Technik beschriebenen Verfahren zumeist in inhomogenen, nichtlangzeitstabilen Dispersionen. Weiterhin zeigen die Dispersionen des Standes der Technik einen hohen Anstieg in der Viskosität bei zugleich nur geringen Partikelgehalten von nur maximal ca. 1 %.

Überraschenderweise wurde nun gefunden, daß im Rahmen des erfindungsgemäßen Verfahrens durch Kombination geeigneter Dispergiermittel mit hohen Energieeinträgen bzw. Scherkräften ein schonendes und kostengünstiges Verfahren vorliegt, um CNTs in deutlich höheren Konzentrationen in verschiedensten Medien stabil zu dispergieren.

Das erfindungsgemäße Verfahren führt zu Dispersionen mit hohen Gehalten an Kohlenstoffnanoröhren (CNTs) bzw. mit hohen Füllgraden (beispielsweise oberhalb von 5 Gew.-%, bezogen auf die resultierenden Dispersionen), und dies bei gleichzeitig niedrigen Viskositäten und somit guter Handhabbarkeit.

Des weiteren weisen die nach dem erfindungsgemäßen Verfahren erhältlichen Dispersionen hohe Lagerstabilitäten auf.

Gegenstand der vorliegenden Erfindung ― gemäß einem **zweiten** Aspekt der vorliegenden Erfindung ― sind somit Dispersionen von Kohlenstoffnanoröhren (CNTs) in einer kontinuierlichen Phase, insbesondere in mindestens einem Dispersionsmittel, welche durch das zuvor geschilderte erfindungsgemäße Verfahren erhältlich sind.

Für weitergehende diesbezügliche Einzelheiten zu den erfindungsgemäßen Dispersionen kann auf die entsprechenden auf die Dispersionen selbst gerichteten Ansprüche verwiesen werden.

Die nach dem erfindungsgemäßen Verfahren erhältlichen Dispersionen nach der vorliegenden Erfindung weisen eine außergewöhnliche Stabilität, insbesondere Lagerstabilität, auf; insbesondere sind die erfindungsgemäßen Dispersionen über mindestens eine Woche, vorzugsweise mindestens einen Monat, besonders bevorzugt mindestens drei Monate, ganz besonders bevorzugt mindestens sechs Monate, lagerstabil. Wie zuvor geschildert, sind die erfindungsgemäßen Dispersionen darüber hinaus bei Raumtemperatur fließfähig und auf diese Weise gut handhabbar. Die erfindungsgemäß hergestellten Dispersionen weisen ein newtonisches oder allenfalls thixotropes und/oder strukturviskoses Verhalten, vorzugsweise ein newtonisches Verhalten, auf.

Die erfindungsgemäß erhältlichen Dispersionen eignen sich für eine Vielzahl von Anwendungen. Weiterer Gegenstand der vorliegenden Erfindung - gemäß einem **dritten** Aspekt der vorliegenden Erfindung ― ist somit die erfindungsgemäße Verwendung der nach dem erfindungsgemäßen Verfahren erhältlichen Dispersionen, wie sie in den entsprechenden Verwendungsansprüchen definiert ist.

So eignen sich die erfindungsgemäßen Dispersionen beispielsweise für die Anwendung im Bereich der Elektronik, beispielsweise im Bereich der Computer-, Halbleiter- und Meßtechnik und -industrie, beispielsweise zur Herstellung von leitenden oder halbleitenden Strukturen, nanoelektrischen Strukturen und Vorrichtungen, Transistoren, nichtflüchtigen Speichern, Displays und Bildschirmen und deren Komponenten sowie meßtechnischen und computertechnischen Bauteilen und Komponenten, wie Schaltkreisen, Dioden und dergleichen etc.

Weiterhin eigenen sich die erfindungsgemäßen Dispersionen zur Anwendung bzw. Inkorporierung in Kunststoffen und Kunststoffmassen, Beschichtungen, Lacken, Farben, Komposit- bzw. Verbundmaterialien und dergleichen.

Beispielsweise können die erfindungsgemäßen Dispersionen verwendet werden, um die elektrische Leitfähigkeit zu erhöhen und/oder die mechanischen Eigenschaften zu verbessern, insbesondere die Festigkeit, vorzugsweise in bezug auf die vorgenannten Materialien (d. h. Kunststoffe und Kunststoffmassen, Beschichtungen, Lacken, Farben, Komposit- bzw. Verbundmaterialien etc.). So eignen sich die erfindungsgemäßen Dispersionen beispielsweise als Verstärkungsmaterialien in den vorgenannten Materialien.

Des weiteren eignen sich die erfindungsgemäß hergestellten Dispersionen zur Herstellung von Bündeln, Fasern, Matten und anderen zusammenhängenden Strukturen von Kohlenstoffnanoröhren (CNTs) (z. B. nach Entfernen des Dispersionsmittels).

Weiterhin sind die erfindungsgemäßen zur Anwendung im Bereich der Luft- und Raumfahrttechnik geeignet.

Ein weiterer Anwendungsbereich der erfindungsgemäßen Dispersionen ist der Bereich der Kühltechnik, insbesondere zur Herstellung von Kühlkörpern für verschiedenste Anwendungen (z. B. für GSM-Basisstationen, als CPU-Kühler etc.).

Schließlich können die erfindungsgemäßen Dispersionen auch zur Abschirmung gegen elektrische und/oder elektromagnetische Strahlung, insbesondere in den vorgenannten Materialien (d. h. Kunststoffe und Kunststoffmassen, Beschichtungen, Lacken, Farben, Komposit- bzw. Verbundmaterialien etc.) verwendet werden.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung aber nicht beschränken sollen.

### Ausführungsbeispiele:

### Ausführungsbeispiele A:

Die besonderen Vorteile der Erfindung sind im folgenden am Beispiel des Dispergierens von CNTs in PMA (Propylenglykolmonomethylether bzw. Methoxypropylacetat) als Dispersionsmedium unter Verwendung verschiedener Dispergiermittel und einer Ultraschalldispergiereinheit beschrieben.

Zunächst wurden verschiedene Vergleichsversuche mit und ohne Dispergiermittel nur mit einem Dispermaten durchgeführt, das Ergebnis war jedoch in allen Fällen enttäuschend: Die Dispersionen waren sehr inhomogen und setzen bereits nach wenigen Stunden bis einem Tag vollständig ab.

Analoge Vergleichsversuche mit dem Ultraschallgeber zeigten hingegen bessere Resultate: So setzt eine 0,1 %ige Dispersion von CNTs ohne Dispergiermittel nur wenig ab, wirkt jedoch noch sehr inhomogen. In diesem Fall werden die Agglomerate zwar aufgebrochen, die CNTs aber im hohen Maße beschädigt und nicht ausreichend stabilisiert. Eine so hergestellte Dispersion ist zur industriellen Verwendung nicht geeignet. Der Zusatz eines Dispergiermittels steigert das Ergebnis allerdings erheblich.

Verwendet man also nur Ultraschall oder nur Dispergiermittel, so resultieren die Versuche in nichtstabilen und inhomogenen Dispersionen oder Aufschlämmungen mit deutlichem Absetzverhalten.

In erfindungsgemäßen Versuchen wurden unterschiedliche Dispergiermittel in unterschiedlichen Mengen in Kombination mit Ultraschalleintrag angewendet, was zu den gewünschten Resultaten führte.

**Tabelle 1: Verwendete Netz- und Dispergiermittel**

| Dispergiermittel | Aufbau | Festkörper |
|---|---|---|
| DISP-I | Hochmolekulares Copolymer mit pigmentaffinen Gruppen (Ausführungsbeispiel 23 der EP 1 593 700 B1) | 98 % |
| DISP-II | Alkylammoniumsalz eines hochmolekularen Copolymers (Ausführungsbeispiel 28 der EP 0 893 155 B1) | 96 % |

Als erste Versuchsreihe wurden 1 %ige Dispersionen an MWCNTs in Methoxypropylacetat (PMA) unter Einsatz von Ultraschall hergestellt (Tabelle 2). Anhand des optischen Eindruckes direkt nach dem Dispergiervorgang, des Absetzverhaltens und der Viskosität wurden die Ergebnisse bewertet. Die Herstellung der Dispersionen erfolgt analog zu der Herstellung, wie sie im nachfolgenden Ausführungsbeispiel B beschrieben ist.

**Tabelle 2: Versuchsübersicht über die 1 %igen Dispersionen von MWCNTs in PMA**

| Dispergiermittel | Dispergiermittelkonzentr. (bezogen auf CNTs) | Dispergieren | Viskosität | Flockulate | Stabilität |
|---|---|---|---|---|---|
| DISP-II | 20,0 % | Ultraschall | hoch | große Partikel an der Glaswand | nicht bestimmbar |
| DISP-I | 20,0 % | Ultraschall | hoch | große Partikel an der Glaswand | nicht bestimmbar |
| ohne | 0 % | Ultraschall | hoch | große Partikel an der Glaswand | nicht bestimmbar |
| ohne | 0 % | Dispermat | niedrig | vollständige Phasentrennung | komplett abgesetzt |

Um insbesondere das Absetzverhalten besser beurteilen zu können, wurden in einem zweiten Schritt stärker verdünnte Dispersionen mit diesen Dispergiermitteln angesetzt (Tabelle 3). Bei einer Konzentration von 0,1 % zeigte die mit DISP-I stabilisierte Dispersion das beste Ergebnis.

**Tabelle 3: Versuchsübersicht über die 0,1 %igen Dispersionen von MWCNTs in PMA**

| Dispergiermittel | Dispergiermittelkonzentr. (bezogen auf CNTs) | Dispergieren | Viskosität | Flockulate | Stabilität |
|---|---|---|---|---|---|
| DISP-II | 100,0 % | Ultraschall | niedrig | wenig | nur leichte Phasentrennung |
| DISP-I | 50,0 % | Ultraschall | niedrig | keine | kein Absetzen |
| DISP-I | 100,0 % | Ultraschall | niedrig | wenig bis keine | kein Absetzen |
| DISP-I | 100,0 % | Dispermat | niedrig | vollständige Phasentrennung | komplett abgesetzt |
| DISP-I | 150,0 % | Ultraschall | niedrig | keine | kein Absetzen |
| ohne | 0 % | Dispermat | niedrig | vollständige Phasentrennung | komplett abgesetzt |
| ohne | 0 % | Ultraschall | niedrig | Viele | leichtes Absetzen |

Bei den Versuchen zeigte sich überraschenderweise, daß die Kombination aus DISP-I und Ultraschall sehr gute Ergebnisse lieferte. Die Ergebnisse waren so gut, daß das System auch 5 % CNT-Gehalt gesteigert werden konnte und die Dispersionen hervorragende Eigenschaften und exzellente Lagerstabilitäten aufwiesen. Auch eine weitere Steigerung auf 10 % oder mehr CNT-Gehalt wurde realisiert.

Weiterhin wurde beobachtet, daß das erfindungsgemäße Verfahren ― unabhängig von der Herstellungsweise der CNTs ― erfolgreich realisierbar ist, d. h. das erfindungsgemäße Verfahren universell für CNTs einsetzbar ist und keine vorherige Oberflächenmodifizierung der CNTs (in situ oder post-synthetisch) bedingt, wodurch enorme Kosten eingespart werden können.

Hierdurch ergeben sich immense Möglichkeiten für die großtechnische Verwendung von CNTs in zahlreichen Applikationen, da die Dispersionen folgende Vorteile aufweisen:
-- hohe Füllgrade von mehr als 5 Gew.-% CNTs
-- homogene langzeitstabile Dispersionen
-- schonendes Dispergierverfahren (schonende Entknäulung der CNTs)
-- universell einsetzbar für alle am Markt erhältlichen CNTs
-- kostengünstiges Dispergierverfahren, gleichermaßen upscalebar und batchweise wie kontinuierlich betreibbar
-- kombinierbar mit weiteren Prozeßschritten
-- geringe Viskositäten realisierbar, falls erforderlich
-- Zugabe weiterer funktionalisierter Additive möglich
-- Funktionalisierung des Dispergiermittels möglich

In weiteren Versuchen konnte gezeigt werden, daß das erfindungsgemäße Verfahren auch auf andere Lösemittel übertragbar ist. Bei Einsatz von Wasser oder extrem unpolaren Medien entstehen natürlich andere Anforderungen an die funktionalen Gruppen des Dispergiermittels.

Weiterhin lassen sich die erfindungsgemäß hergestellten Dispersionen weiter verarbeiten, z. B. im Hinblick auf eine Orientierung der CNTs in der Dispersionsmittelmatrix. So lassen sich CNTs in einem elektrischen Feld parallel ausrichten. Hierzu müssen die CNTs aber vereinzelt und homogen dispergiert vorliegen, idealerweise in hoher Konzentration. Dies wird nun erstmals durch das erfindungsgemäße Verfahren gewährleistet. Eine anschließende parallele Ausrichtung ist somit möglich und für viele Anwendungen essentiell.

Ein entsprechender Versuchsaufbau ist wie folgt konzipiert: In einem Tank legt man eine Aufschlämmung der agglomerierten CNTs im gewünschten Dispersionsmittel zusammen mit dem Dispergiermittel vor und pumpt dann in einem Kreislauf durch eine Durchflußzelle, in welcher der Dispergiervorgang mittels Ultraschall erfolgt. Die so erhaltene Dispersion kann dann entweder in den Tank zurückgeführt werden und im Kreislauf dispergiert werden, bis der gewünschte Dispersionsgrad erreicht ist (Batchbetrieb) oder in eine weitere Durchflußzelle mit Ultraschalldispergator gepumpt werden (kontinuierlicher Betrieb). Anschließend kann dann die Vermischung z. B. mit einem Resin bzw. Harz (oder einem Lack, einer Beschichtungsflüssigkeit etc.) erfolgen, und ein anschließendes Durchfließen eines elektrischen Feldes richtet die CNTs parallel aus. Die parallele Ausrichtung kann aber auch zu einem späteren Zeitpunkt erfolgen. Vorraussetzung ist nur eine stabile Dispersion vereinzelter CNTs, was durch das erfindungsgemäße Verfahren gewährleistet wird.

### Ausführungsbeispiele B:

### Herstellung einer 1,0%igen Dispersion an CNTs (Baytubes®, z. B. Baytubes® C 150 P) in Methoxypropylacetat (PMA) mit 100 % DISP-I

In einem 350-ml-PE-Becher werden 196 g PMA und 2 g DISP-I vorgelegt und mittels eines Dispermaten bei 1000 Upm mit einer Zahnscheibe (d = 40 mm) homogenisiert. Zu der Mischung werden 2 g CNTs zugegeben und das PE-Gefäß in ein auf 5 °C temperiertes Doppelmantelgefäß aus Edelstahl mit Wasser als Kühlmedium gegeben. Zum Dispergieren dient eine Ultraschallsonotrode (d = 38 mm), die ca. 2 bis 3 cm in das Medium eintaucht. Mit einer Leistung von ca. (500 ± 20) W wird die Suspension 1,5 bis 2 min dispergiert, so daß die Temperatur unter 70°C bleibt. Es resultiert eine homogene, lagerstabile schwarze Dispersion mit geringer Viskosität.

### Viskositäten

### Abhängigkeit der Viskosität vom Füllgrad an CNTs

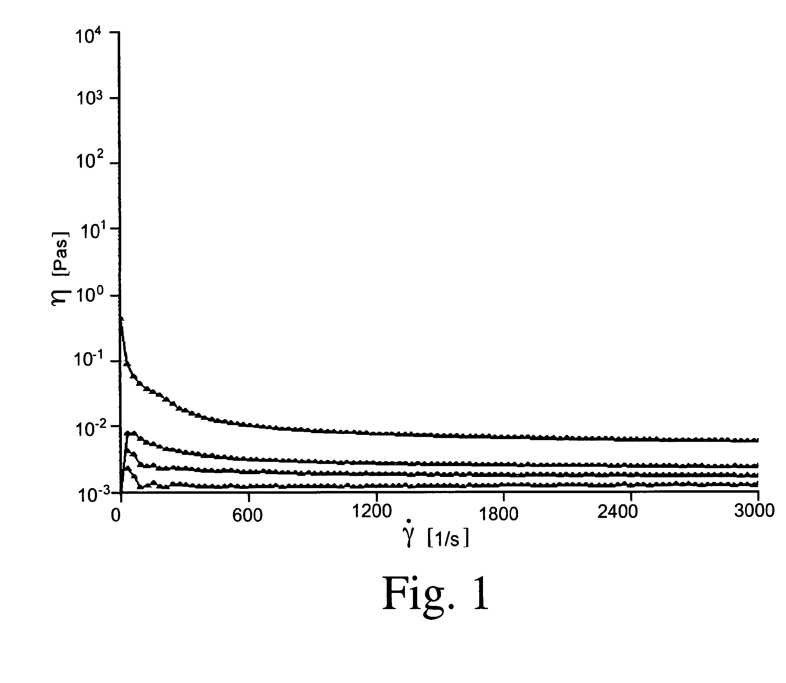

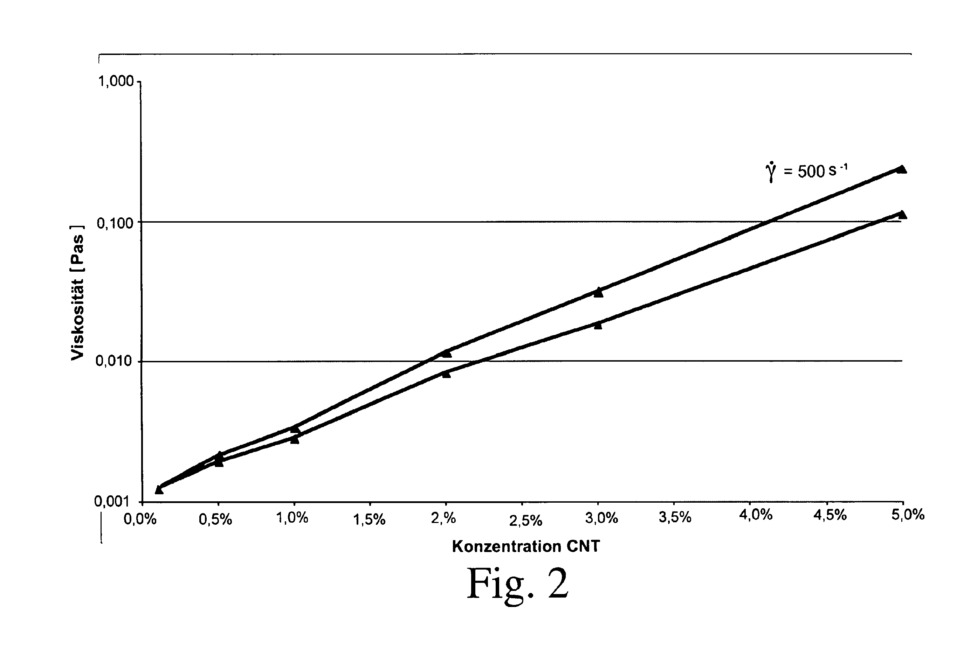

Zur Verdeutlichung des Viskositätsanstiegs mit steigendem Füllgrad an CNTs wurden die Viskositäten unterschiedlicher Dispersionen in PMA mit CNT-Gehalten im Bereich von 0,1 % bis 5 % gemessen (Fig. 1 und Fig. 2). Wie man sieht, steigt die Viskosität exponentiell mit der Konzentration an, bewegt sich aber auch bei Konzentrationen oberhalb von 3 % noch in einem handhabbaren Bereich. Fig. 1 zeigt die Viskositäten von PMA-Dispersionen mit unterschiedlichen Gehalten an CNTs (0,1 %, 0,5 %, 1,0 %, 2,0 %, 3,0 % und 5,0 %, Kurven von unten nach oben betrachtet) bei konstanter Menge an Dispergiermittel von 200 Gew.-% in bezug auf CNTs, und Fig. 2 ist eine entsprechende logarithmische Auftragung der Viskositäten von PMA-Dispersionen mit unterschiedlichen Gehalten an CNTs gegen die Konzentration der CNTs.

### Abhängigkeit der Viskosität vom Anteil an Dispergiermittel

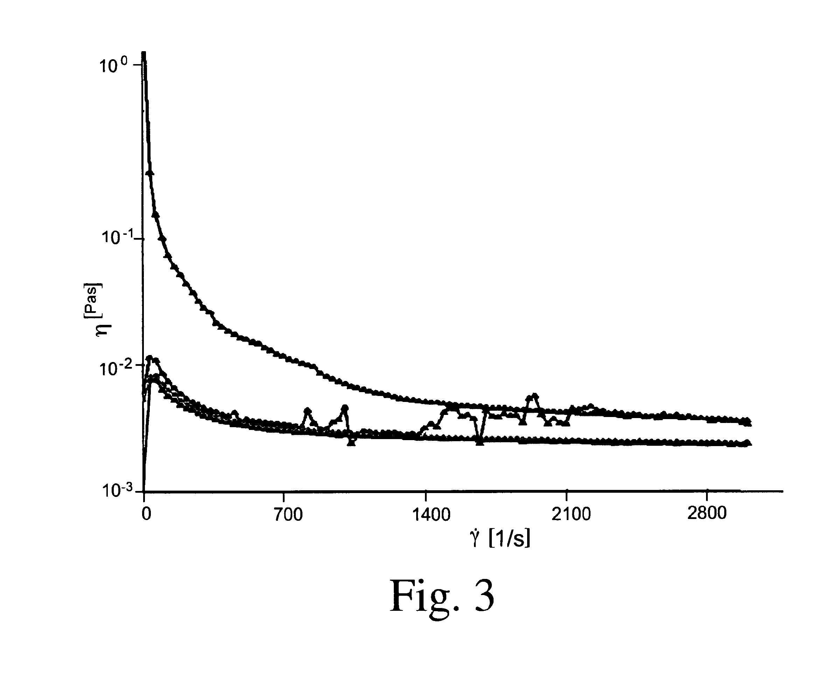

Aufgrund der großen Oberfläche der CNTs und ihrem Drang zu Verknäulen ist ein hoher Dispergiermittelanteil einzusetzen. Es wurden daher Dispergiermittelkonzentrationen von 50 bis 200 Gew.-% (bezogen auf CNTs) eingesetzt. Als Maß für die Dispergierung dient ebenfalls die Viskosität. Aus Fig. 3 erkennt man, daß die Viskosität ab einer Dispergiermittelkonzentration von 150 % unverändert niedrig bleibt. Deutlich geringere Konzentrationen führen zu höheren Viskositäten. Fig. 3 zeigt eine Gegenüberstellung der Viskositäten von 1 %igen Dispersionen an CNTs in PMA mit unterschiedlichen Gehalten an DISP-I (50 Gew.-%, 100 Gew.-%, 150 Gew.-% und 200 Gew.-%, bezogen auf CNTs, Kurven von oben nach unten betrachtet).

### Vergleich von unterschiedlichen CNTs

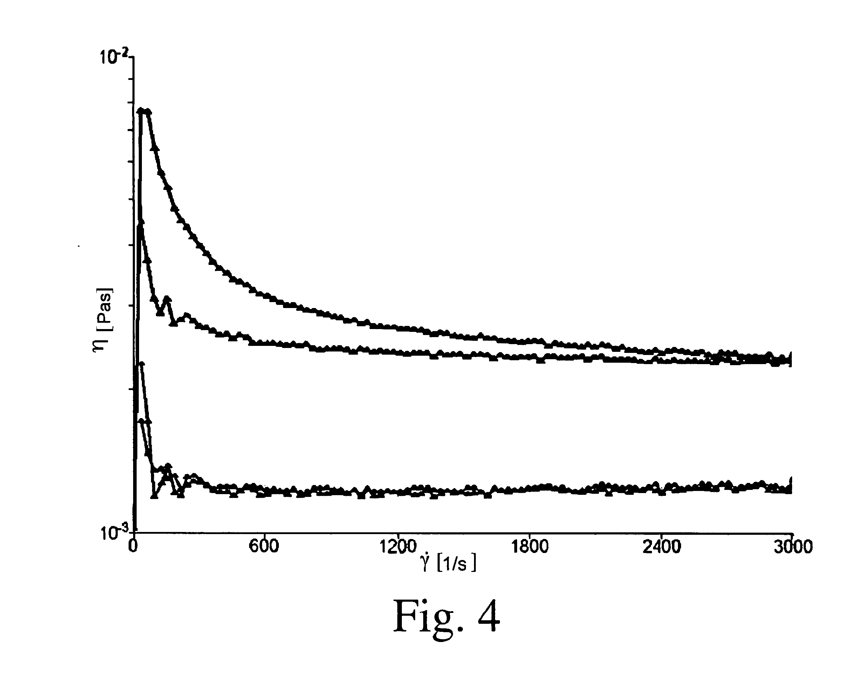

Wie aus Fig. 4 ersichtlich ist, läßt sich das erfindungsgemäße Verfahren zum Dispergieren von CNTs nahezu universell auf unterschiedlichste Arten von CNTs anwenden. Fig. 4 zeigt beispielhaft die Viskositäten von 0,1%igen (untere Kurven) bzw. 1 %igen Dispersionen (obere Kurven) von CNTs in PMA, und zwar einerseits für Baytubes® C 150 P der Bayer MaterialScience AG und andererseits CNTs von CNT Co., Ltd.). Man erkennt deutlich, daß die Viskositäten nahezu identisch sind, unabhängig davon von welchem Hersteller die CNTs stammen.

### Zusammenfassung der Ergebnisse

Die vorliegenden Ergebnisse wurden unter Meßbedingungen ermittelt, welche das "Wandgleiten" der Proben "umgehen" und einen Vergleich der niedrig- und hochkonzentrierten CNT-Suspensionen ermöglichen. Die so erhaltenen Meßwerte können zwar nicht als Absolutwerte betrachtet werden, dienen aber als Grundlage für einen empirischen Vergleich der Proben.

Die 0,1 %igen bzw. 1,0%igen unstabilisierten Suspensionen ohne Dispergiermittel von Baytubes® in PMA lassen sich aufgrund des Absetzverhaltens nicht vermessen.

Durch das erfindungsgemäße Verfahren lassen sich fließfähige Pasten mit einem Gehalt von mehr als 5 Gew.-% CNTs herstellen.

Von den getesteten Netzmitteln zeigte sich hinsichtlich des Viskositätsniveaus DISP-I am effektivsten.

Mit Zunahme des Festkörpergehaltes der CNTs und bei gleichbleibender Dispergiermittelbelegung (200 Gew.-% DISP-I) steigt die Viskosität exponentiell.

### Meßbedingungen

### ThermoHaake RS300 mit elektrischer Temperiereinrichtung UTCE/C

Meßsystem: 35 mm 1° Kegel/Platte-System
Versuchsart: Rotation im CSR-Modus *(Controlled Shear Rate)*

Alle Proben zeigen eine stark ausgeprägte Fließgrenze. Die visuell sensorische Prüfung spiegelte zudem thixotropie- bzw. strukturviskoses Probeverhalten wieder.

### Optische Mikroskopiebilder

Um einen Eindruck über den Agglomerationsgrad und die Qualität der Dispersion zu erhalten, wurden mikroskopische Aufnahmen der unterschiedlichen Dispersionen hergestellt. Im folgenden ist eine Auswahl besonders gut und besonders schlecht dispergierter Proben abgebildet.

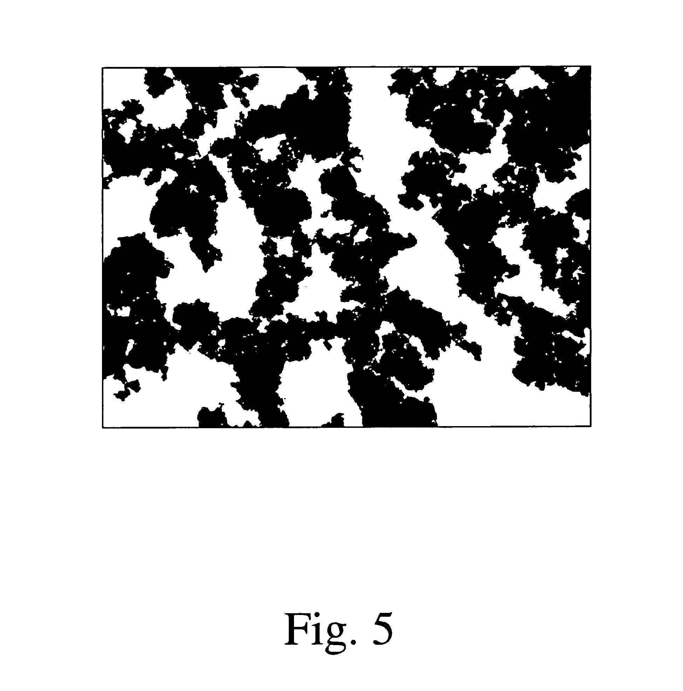

Fig. 5 zeigt eine 10fache Vergrößerung einer 0,1%igen Dispersion von CNTs in PMA nach Ultraschallbehandlung ohne Dispergiermittel (sehr schlechte Dispersion, große Agglomerate).

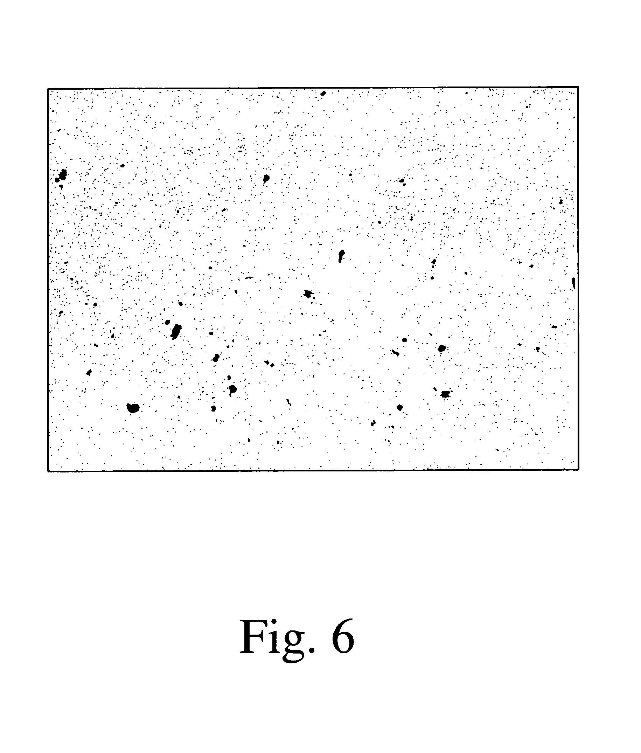

Fig. 6 zeigt eine 10fache Vergrößerung einer 0,1%igen Dispersion von CNTs in PMA nach Ultraschallbehandlung in Gegenwart von 50 % Dispergiermittel (DISP-II) (gute und stabile Dispersion, wenige Agglomerate, deutlich homogen).

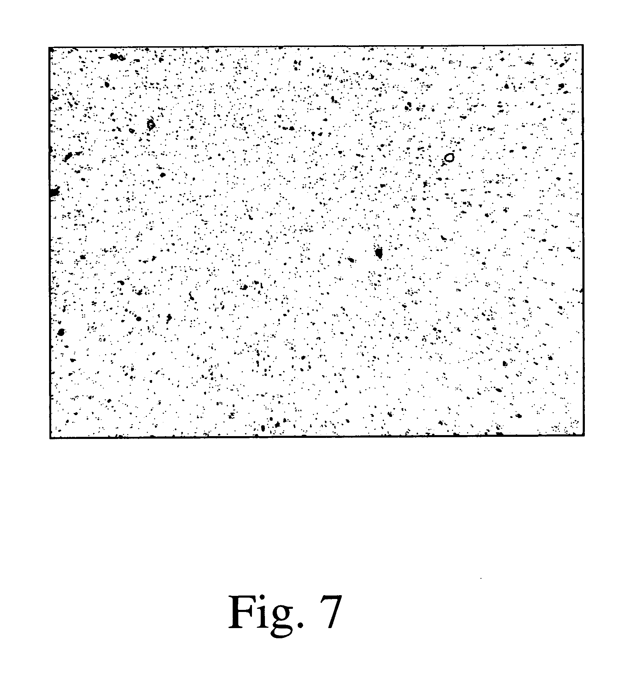

Fig. 7 zeigt eine 10fache Vergrößerung einer 0,1%igen Dispersion von CNT in PMA nach Ultraschallbehandlung in Gegenwart von 100 % Dispergiermittel (DISP-I) (sehr gute und sehr homogene Dispersion, keine großen Agglomerate mehr, stabil).

### Stabilitäten

Die erfindungsgemäß hergestellten Dispersionen sind mittlerweile seit ca. 4 Monaten bei Raumtemperatur stabil und zeigen kein Absetzen der CNTs. Auch Dispersionen mit CNT- Gehalten von 3 % und mehr sind zwar thixotrop, weisen jedoch kein Absetzen der CNTs über einen längeren Zeitraum auf. Anderweitig hergestellte Dispersionen zeigen dagegen häufig bereits nach Stunden eine vollständige Phasentrennung.

Die vorliegende Erfindung wird durch die folgenden Aspekte bzw. Erfindungsgegenstände näher beschrieben:
Aspekt 1:
   Verfahren zum Dispergieren von Kohlenstoffnanoröhren (CNTs) in einer kontinuierlichen Phase, insbesondere in mindestens einem Dispersionsmittel,
   **dadurch gekennzeichnet,**
   daß die Kohlenstoffnanoröhren (CNTs), insbesondere ohne vorangehende Vorbehandlung, in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags dispergiert werden.
Aspekt 2:
   Verfahren nach Aspekt 1, dadurch gekennzeichnet, daß die Kohlenstoffnanoröhren (CNTs) in Mengen von 1 • 10⁻⁵ bis 30 Gew.-%, insbesondere 1 • 10⁻⁴ bis 20 Gew.-%, vorzugsweise 1 • 10⁻³ bis 10 Gew.-%, besonders bevorzugt 1 • 10⁻² bis 7,5 Gew.-%, ganz besonders bevorzugt 1 • 10⁻¹ bis 5 Gew.-%, bezogen auf die resultierende Dispersion, in der kontinuierlichen Phase dispergiert werden.
Aspekt 3:
   Verfahren nach Aspekte 1 oder 2, dadurch gekennzeichnet, daß das Dispergiermittel (Dispergator) in Mengen von 25 bis 400 Gew.-%, insbesondere 50 bis 350 Gew.-%, vorzugsweise 75 bis 300 Gew.-%, besonders bevorzugt 100 bis 275 Gew.-%, ganz besonders bevorzugt 150 bis 250 Gew.-%, bezogen auf die zu dispergierenden Kohlenstoffnanoröhren (CNTs), eingesetzt wird.
Aspekt 4:
   Verfahren nach einem oder mehreren der vorangehenden Aspekte, dadurch gekennzeichnet, daß das Verfahren bzw. der Dispergiervorgang über eine Zeitdauer von 0,01 bis 30 Minuten, insbesondere 0,1 bis 20 Minuten, vorzugsweise 0,2 bis 15 Minuten, besonders bevorzugt 0,5 bis 10 Minuten, ganz besonders bevorzugt 0,5 bis 5 Minuten, durchgeführt wird.
Aspekt 5:
   Verfahren nach einem oder mehreren der vorangehenden Aspekte, dadurch gekennzeichnet, daß der Energieeintrag mittels Ultraschallbehandlung erfolgt und/oder daß die eingetragene Energiemenge, berechnet als eingetragene Energie pro Menge an zu dispergierenden Kohlenstoffnanoröhren (CNTs), 5.000 bis 500.000 kJ/kg, insbesondere 10.000 bis 250.000 kJ/kg, vorzugsweise 15.000 bis 100.000 kJ/kg, besonders bevorzugt 25.000 bis 50.000 kJ/kg, beträgt.
Aspekt 6:
   Verfahren nach einem oder mehreren der vorangehenden Aspekte, dadurch gekennzeichnet, daß dem eigentlichen Dispergiervorgang ein Verfahrensschritt vorausgeht, bei dem die nachfolgend zu dispergierenden Kohlenstoffnanoröhren (CNTs) mit der kontinuierlichen Phase, insbesondere dem Dispersionsmittel, und dem Dispergiermittel sowie gegebenenfalls weiteren Bestandteilen und/oder Inhaltsstoffen der Dispersion in Kontakt gebracht und homogenisiert werden, insbesondere unter Rühren.
Aspekt 7:
   Verfahren nach einem oder mehreren der vorangehenden Aspekte, dadurch gekennzeichnet, daß das Verfahren bei Temperaturen unterhalb der Siedetemperatur der kontinuierlichen Phase, insbesondere des Dispersionsmittels, durchgeführt wird, insbesondere bei Temperaturen im Bereich von 10 bis 100 °C, vorzugsweise 15 bis 70 °C, insbesondere wobei der Dispergiervorgang gegebenenfalls unter Kühlen durchgeführt wird.
Aspekt 8:
   Verfahren nach einem oder mehreren der vorangehenden Aspekte, dadurch gekennzeichnet, daß der Dispergiervorgang ohne vorangehende Vorbehandlung der zu dispergierenden Kohlenstoffnanoröhren (CNTs), insbesondere ohne vorangehende Oxidation, chemische Behandlung, thermische Behandlung, Polarisierung oder Halogenierung, durchgeführt wird.
Aspekt 9:
   Verfahren nach einem oder mehreren der vorangehenden Aspekte, dadurch gekennzeichnet,
   ● daß die eingesetzten Kohlenstoffnanoröhren (CNTs) aus einwandigen Kohlenstoffnanoröhren (SWCNTs bzw. SWNTs) oder mehrwandigen Kohlenstoffnanoröhren (MWCNTs bzw. MWNTs), insbesondere 2- bis 30wandigen, vorzugsweise 3- bis 15wandigen, Kohlenstoffnanoröhren, ausgewählt werden und/oder
   ● daß die eingesetzten Kohlenstoffnanoröhren (CNTs) mittlere Innendurchmesser von 0,4 bis 50 nm, insbesondere 1 bis 10 nm, vorzugsweise 2 bis 6 nm, aufweisen und/oder
   ● daß die eingesetzten Kohlenstoffnanoröhren (CNTs) mittlere Außendurchmesser von 1 bis 60 nm, insbesondere 5 bis 30 nm, vorzugsweise 10 bis 20 nm, aufweisen und/oder
   ● daß die eingesetzten Kohlenstoffnanoröhren (CNTs) mittlere Längen von 0,01 bis 1.000 µm, insbesondere 0,1 bis 500 µm, vorzugsweise 0,5 bis 200 µm, besonders bevorzugt 1 bis 100 µm, aufweisen und/oder
   ● daß die eingesetzten Kohlenstoffnanoröhren (CNTs) eine Zugfestigkeit pro Kohlenstoffnanoröhre von mindestens 1 GPa, insbesondere mindestens 5 GPa, bevorzugt mindestens 10 GPa, aufweisen und/oder
   ● daß die eingesetzten Kohlenstoffnanoröhren (CNTs) einen Elastizitätsmodul pro Kohlenstoffnanoröhre von mindestens 0,1 TPa, insbesondere mindestens 0,5 TPa, bevorzugt mindestens 1 TPa, aufweisen und/oder
   ● daß die eingesetzten Kohlenstoffnanoröhren (CNTs) eine thermische Leitfähigkeit von mindestens 500 W/mK, insbesondere mindestens 1.000 W/mK, bevorzugt mindestens 2.000 W/mK, aufweisen und/oder
   ● daß die eingesetzten Kohlenstoffnanoröhren (CNTs) eine elektrische Leitfähigkeit von mindestens 10³ S/cm, insbesondere mindestens 0,5 • 10⁴ S/cm, bevorzugt mindestens 10⁴ S/cm, aufweisen und/oder
   ● daß die eingesetzten Kohlenstoffnanoröhren (CNTs) eine Schüttdichte im Bereich von 0,01 bis 0,3 g/cm³, insbesondere 0,02 bis 0,2 g/cm³, vorzugsweise 0,1 bis 0,2 g/cm³, aufweisen.
Aspekt 10:
   Verfahren nach einem oder mehreren der vorangehenden Aspekte, dadurch gekennzeichnet, daß als kontinuierliche Phase, insbesondere Dispersionsmittel, ein wäßrig, organisch oder wäßrig-organisch basiertes Dispersionsmittel, bevorzugt ein organisches Dispersionsmittel, eingesetzt wird und/oder daß als kontinuierliche Phase ein unter Dispergierbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Dispersionsmittel eingesetzt wird.
Aspekt 11:
   Verfahren nach einem oder mehreren der vorangehenden Aspekte, dadurch gekennzeichnet, daß als kontinuierliche Phase ein Dispersionsmittel eingesetzt wird, welches ausgewählt wird aus der Gruppe von (i) Alkoholen, insbesondere geradkettigen, verzweigten oder cyclischen, einwertigen oder mehrwertigen Alkoholen, wie Methanol, Ethanol, Butanol, Ethylhexanol, Dekanol, Isotridecylalkohol, Benzylalkohol, Propargylalkohol, Oleylalkohol, Linoleylalkohol, Oxoalkoholen, Neopentylalkohol, Cyclohexanol, Fettalkoholen und Di- und Polyolen, wie Glykolen; (ii) Etheralkoholen, wie 2-Methoxyethanol, Monophenyldiglykol, Phenylethanol, Ethylenglykol und Propylenglykol; (iii) Kohlenwasserstoffen, wie Toluol, Xylol und aliphatischen und/oder cyloaliphatischen Benzinfraktionen, chlorierten Kohlenwasserstoffen, wie Chloroform und Trichlorethan; (iv) Ethern, insbesondere cyclischen und acyclischen Ethern, wie Dioxan, Tetrahydrofuran und Polyalkylenglykoldialkylethern; (v) Carbonsäureestern, insbesondere Monocarbonsäureestern, wie Ethylacetat und Butylacetat, und Di- oder Polycarbonsäureestern, wie Dialkylestern von C₂- bis C₄-Dicarbonsäuren ("Dibasic Esters"); (vi) Etherestern, insbesondere Alkylglykolestern, wie Ethylglykolacetat und Methoxypropylacetat; (vii) Lactonen, wie Butyrolacton; (viii) Weichmachern, insbesondere Phthalaten; (ix) Aldehyden und Ketonen, wie Methylisobutylketon, Cyclohexanon und Aceton; (x) Säureamiden, wie Dimethylformamid; (xi) N-Methylpyrrolidon; sowie Mischungen der vorgenannten Dispersionsmittel.
Aspekt 12:
   Verfahren nach einem oder mehreren der vorangehenden Aspekte, dadurch gekennzeichnet, daß als Dispergiermittel ein polymeres Dispergiermittel, insbesondere auf Basis eines funktionalisierten Polymers, vorzugsweise mit einer zahlenmittleren Molekularmasse von mindestens 500 g/mol, vorzugsweise mindestens 1.000 g/mol, bevorzugt mindestens 2.000 g/mol, eingesetzt wird, insbesondere wobei das Dispergiermittel ausgewählt wird aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder versalzten Polyaminen, Phosphorsäureestem, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Mischungen.
Aspekt 13:
   Verfahren nach einem oder mehreren der vorangehenden Aspekte, dadurch gekennzeichnet, daß das Dispergiermittel ausgewählt ist aus Additionsverbindungen, welche erhältlich sind durch die Umsetzung von
   a) einem oder mehreren urethdiongruppenhaltigen Polyisocyanaten mit
   b) einer oder mehreren Verbindungen der Formel (I)

      Y-(XH)ₙ (I)

      wobei
      XH für eine gegenüber Isocyanaten reaktive Gruppe steht und
      Y für eine nicht gegenüber Isocyanaten reaktive, monomere oder polymere Gruppe steht, die eine oder mehrere aliphatische, cycloaliphatische, aliphatische und/oder aromatische Gruppen umfaßt,
      wobei Y eine zahlenmittlere Molmasse kleiner 20.000 g/mol besitzt und
      wobei n für 1, 2 oder 3 steht und
      wobei für mindestens 50 Mol.-% der Verbindungen der Formel (I) gilt, daß n = 1 ist,
      unter der Vorgabe, daß im wesentlichen alle freien Isocyanatgruppen der Komponente a) mit den Verbindungen der Formel (I) zu einem Urethdiongruppen enthaltenden Zwischenprodukt umgesetzt werden,
      wobei anschließend die Urethdiongruppen mit
   c) einer oder mehreren Verbindungen der allgemeinen Formel (II)

      Z-NHR (II)

      zur Reaktion gebracht werden, worin
      R für Wasserstoff oder eine gradkettige oder verzweigte Alkylgruppe mit 1 bis 4 Kohlenstoffatomen steht und
      Z einen aliphatischen, cycloaliphatischen und/oder aromatischen basischen Rest darstellt
      und gegebenenfalls nach dieser Reaktion im Reaktionsprodukt gegebenenfalls noch vorhandene reaktive Aminogruppen mit gegenüber Aminogruppen reaktiven Verbindungen umgesetzt werden;
      sowie Salzen oder Quarternisierungsprodukten dieser Additionsverbindungen.
Aspekt 14:
   Verfahren nach Aspekt 13, dadurch gekennzeichnet, daß Y gegebenenfalls Heteroatome O, S und/oder N und/oder Ether-, Urethan-, Carbonat, Siloxan- und/oder Estergruppen enthält und gegebenenfalls Wasserstoff gegen Halogen substituiert ist.
Aspekt 15:
   Verfahren nach Aspekt 13 oder 14, dadurch gekennzeichnet, daß Z eine oder mehrere der folgenden Bedeutungen hat:
   A) eine aliphatische und/oder cycloaliphatische Gruppe mit mindestens einer tertiären Aimogruppe oder
   B) eine heterocyclische Gruppe mit mindestens einem basischen Ringstickstoffatom, das kein Wasserstoff enthält, wobei die heterocyclische Gruppe über eine organische Kopplungsgruppe an die Gruppe NHR gebunden sein kann, oder
   C) ein Rest eines gegebenenfalls modifizierten Polyamins und/oder Polyimins.
Aspekt 16:
   Verfahren nach einem oder mehreren der Aspekte 13 bis 15, dadurch gekennzeichnet, daß als Z-NHR Verbindungen aus der Gruppe von Diethylentriamin, Triethylentetramin, Teraethylenpentamin, Pentaethylenhexamin, Hexaethylenheptamin, höheren linearen Kondensaten der allgemeinen Formel NH₂-(C₂H₄NH)ₙ-C₂H₄-NH₂ mit n > 5, verzweigten Poly-(C₂-C₄)-alkylenaminen, Poly-(C₂-C₄)-alkyleniminen mit tertiären Aminogruppen und einem zahlenmittleren Molekulargewicht bis zu 1.000.000 g/mol oder Mischungen solcher Amine verwendet werden.
Aspekt 17:
   Verfahren nach einem oder mehreren der Aspekte 13 bis 16, dadurch gekennzeichnet, daß es sich im Fall der verzweigten Poly-(C₂-C₄)-alkylenamine mit tertiären Aminogruppen um Aziridinpolymere (Polyethylenimine) handelt und/oder daß ein Teil der vorliegenden freien reaktiven Aminogruppen mit Epoxiden, Carbonaten, Carbonsäuren und/oder α,β-ungesättigten Verbindungen umgesetzt wird und/oder daß als Verbindungen der Formel (I) hydroxyfunktionelle Polyether, hydroxyfunktionelle Polyester, hydroxyfunktionelle Polyetherpolyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind, eingesetzt werden und/oder daß es sich bei den urethdiongruppenhaltigen Polyisocyanaten um cyclische Dimerisierungsprodukte von Diisocyanaten auf Basis von Hexamethylendiisocyanat, Isophorondiisocyanat und/oder Toluylendiisocyanat handelt.
Aspekt 18:
   Verfahren nach einem oder mehreren der Aspekte 1 bis 12, dadurch gekennzeichnet, daß als Dispergiermittel Additionsverbindungen und deren Salze eingesetzt werden, welche erhältlich sind durch Umsetzung von Polyisocyanaten, Hydroxyverbindungen, Zerewitinoff-Wasserstoff sowie mindestens eine stickstoffhaltige basische Gruppe enthaltenden Verbindungen und gegebenenfalls Verbindungen, die Aminwasserstoff enthalten, gegebenenfalls in Anwesenheit von Lösungsmitteln und gegebenenfalls in Gegenwart von Umsetzungskatalysatoren, wobei diese Additionsverbindungen dadurch erhältlich sind, daß Polyisocyanate mit einer mittleren Funktionalität von 2.5 bis 6
   a) mit Monohydroxyverbindungen der Formel (I')

      Y'-OH (I')

      wobei Y' die folgenden Bedeutungen hat:
      (i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
      (ii) mindestens eine -O- und/oder -COO-Gruppe enthaltende aliphatische, cycloaliphatische und/oder aromatische Gruppen mit Molekulargewichten von 350 bis 8.000, wobei die Wasserstoffatome teilweise durch Halogene ersetzt sein können,
      in einer solchen Menge umgesetzt werden, daß 15 bis 50 %, vorzugsweise 20 bis 40 %, besonders bevorzugt 20 bis 35 %, der NCO-Gruppen umgesetzt sind,
   b) das erhaltene Reaktionsprodukt mit Verbindungen der Formel (II')

      G-(E)ₙ (II')

      wobei E für -OH-, -NH₂ und/oder -NHR (worin R eine Alkylgruppe mit 1 bis 4 Kohlenstoffatomen darstellt) steht und n für 2 oder 3 steht und G eine mindestens 2 Kohlenstoffatome enthaltende aliphatische Gruppe mit Molekulargewichten von höchstens 3.000 darstellt, die -O-, -COO-, -CONH-, -S- und/oder -SO₂-Gruppen enthalten kann, in einer solchen Menge umgesetzt wird, daß weitere 15 bis 45 %, vorzugsweise 20 bis 40 %, besonders bevorzugt 20 bis 35 %, der NCO-Gruppen der ursprünglich eingesetzten Polyisocyanate umgesetzt sind, jedoch die Summe der NCO-Umsetzungsgrade der Umsetzungen a) und b) mindestens 40 % und maximal 75 %, vorzugsweise 45 bis 65 %, besonders bevorzugt 45 bis 55 %, beträgt,
   c) das erhaltene Reaktionsprodukt mit Verbindungen der allgemeinen Formel (III')

      Z-Q (III')

      worin Q für -OH, -NH₂, -NHR (worin R eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit 1 bis zu 10 C-Atomen an die Gruppe Q gebunden sein kann, in einer solchen Menge umgesetzt wird, daß auf jede verbleibende in den Stufen a) und b) noch nicht umgesetzte Isocyanatgruppe mindestens ein Molekül der Verbindung Z-Q entfällt.
Aspekt 19:
   Verfahren nach einem oder mehreren der Aspekte 1 bis 12, dadurch gekennzeichnet, daß als Dispergiermittel Additionsverbindungen und deren Salze eingesetzt werden, welche dadurch erhältlich sind, daß, gegebenenfalls in Anwesenheit von Lösungsmitteln und gegebenenfalls in Gegenwart von Umsetzungskatalysatoren, Polyisocyanate mit einer mittleren Funktionalität von 2,5 bis 20
   a) mit Monohydroxyverbindungen der Formel (I")

      Y-OH (I")

      wobei Y die folgenden Bedeutungen hat:
      (i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
      (ii) mindestens eine -O- und/oder -COO-Gruppe enthaltende aliphatische, cycloaliphatische und/oder aromatische Gruppen mit mittleren Molekulargewichten M̅ₙ von 200 bis 10.000, wobei die Wasserstoffatome teilweise durch Halogene ersetzt sein können,
      in einer solchen Menge umgesetzt werden, daß 10 bis 70 %, vorzugsweise 15 bis 45 %, besonders bevorzugt 20 bis 40 %, der NCO-Gruppen umgesetzt sind,
   b) mit Verbindungen der Formel (II")

      G-(E)ₙ (II")

      wobei E für -OH-, -NH₂ und/oder -NHR (worin R eine Alkylgruppe mit 1 bis 4 Kohlenstoffatomen darstellt) steht und n für 2 oder 3 steht und G eine mindestens 2 Kohlenstoffatome enthaltende aliphatische cycloaliphatische und/oder aromatische Gruppe mit mittlerem Molekulargewicht M̅ₙ von höchstens 3.000 darstellt, die -O-, -COO-, -CONH-, -S-, und/oder -SO₂-Gruppen enthalten kann, in einer solchen Menge umgesetzt werden, daß 1 bis 50 %, vorzugsweise 5 bis 45 %, besonders bevorzugt 15 bis 40 %, der NCO-Gruppen der ursprünglich eingesetzten Polyisocyanate umgesetzt sind, wobei jedoch durch die Umsetzungen a) und b) insgesamt mindestens 20 % und maximal 85 %, vorzugsweise 30 bis 65 %, besonders bevorzugt 40 bis 60 %, der NCO-Gruppen der ursprünglich eingesetzten Polyisocyanate umgesetzt sind,
   c) mit Verbindungen der allgemeinen Formel (III")

      Z-Q (III")

      worin Q für -OH, -NH₂, -NHR (worin R für eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit bis zu 10 C-Atomen an die Gruppe Q gebunden sein kann, in einer solchen Menge umgesetzt werden, daß auf jede verbleibende in den Stufen a) und b) nicht umgesetzte Isocyanatgruppe mindestens ein Molekül der Verbindung Z-Q entfällt,
      wobei mindestens 1 Mol-% der oben definierten Verbindungen der Formel (I") ersetzt sind durch solche Verbindungen der Formel (Ia)

      Y'-OH (Ia)

      worin Y' eine aliphatische, cycloaliphatische und/oder aromatische Gruppe mit mittleren Molekulargewichten M̅ₙ von 200 bis 10.000, wobei die Wasserstoffatome teilweise durch Halogene ersetzt sein können, und die mindestens eine -NHCOO-Gruppe enthalten, darstellt und/oder mindestens 1 Mol-% der oben definierten Verbindungen der Formel (I") ersetzt sind durch monohydroxyfunktionelle Polyacrylsäureeseter und/oder Polymethacrylsäureester und/oder Copolymerisaten davon mit bis zu 50 Mol-%, bezogen auf Monomereinheiten, Comonomeren, insbesondere Vinylester, Vinylether, Styrol, Vinyltoluol und/oder Vinylcyclohexan, mit einem mittleren Molekulargewicht M̅ₙ von höchstens 10.000, und/oder mindestens 1 Mol-% der oben definierten Verbindungen der Formel (II") ersetzt sind durch solche Verbindungen der Formel (IIa)

      G'-(OH)ₙ (IIa)

      worin G' eine mindestens 2 Kohlenstoffatome enthaltende aliphatische, cycloaliphatische und/oder aromatische Gruppe mit mittlerem Molekulargewicht M̅ₙ von höchstens 3.000 darstellt, die mindestens eine -NHCOOund/oder -Si(CH₃)₂O-Gruppe enthält, darstellt und n für eine Zahl von 2 bis 3 steht.
Aspekt 20:
   Verfahren nach einem oder mehreren der Aspekte 1 bis 12, dadurch gekennzeichnet, daß als Dispergiermittel Additionsverbindungen und deren Salze eingesetzt werden, welche erhältlich sind durch Umsetzung von Polyisocyanaten, Hydroxyverbindungen und weiteren Zerewitinoff-Wasserstoff sowie mindestens eine saure funktionelle Gruppierung oder Alkoxysilyl-Gruppe enthaltenden Verbindungen, gegebenenfalls in Anwesenheit von Lösungsmitteln und gegebenenfalls in Gegenwart von Umsetzungskatalysatoren, wobei die Additionsverbindungen dadurch erhältlich sind, daß Polyisocyanate mit einer mittleren Funktionalität von 2,5 bis 10
   a) mit Monohydroxyverbindungen der Formel (I"')

      Y-OH (I"')

      wobei Y die folgenden Bedeutungen hat:
      (i) aliphatische und/oder cycloaliphatische Kohlenwasserstoffgruppen mit 8 bis 30 Kohlenstoffatomen, deren Wasserstoffatome teilweise durch halogene und/oder Arylreste ersetzt sein können,
      (ii) mindestens eine -O-, -NHCOO- und/oder -COO-Gruppe enthaltende aliphatische, cycloaliphatische und/oder aromatische Gruppe mit mittleren Molekulargewichten M̅ₙ von 200 bis 10.000, wobei die Wasserstoffatome teilweise durch Halogene ersetzt sein können,
      in einer solchen Menge umgesetzt werden, daß 10 bis 70 % der NCO-Gruppen umgesetzt sind,
   b) mit Verbindungen der Formel (II"')

      G-(E)ₙ (II"')

      wobei G-(E)ₙ Diole, Triole, Diamine, Dihydroxydialkylsulfide oder Dihydroxysulfone darstellt, n für 2 oder 3 steht und G eine mindestens 2 Kohlenstoffatome enthaltende aliphatische, cycloaliphatische und/oder aromatische Gruppe mit mittlerem Molekulargewicht M̅ₙ von höchstens 3.000 darstellt, die -O-, -COO-, CONH-, -NHCOO-, - S-, -Si(CH₃)₂O- und/oder -SO₂-Gruppen enthalten kann,
      in einer solchen Menge umgesetzt wird, daß 1 bis 50 % der NCO-Gruppen der ursprünglich eingesetzten Polyisocyanate umgesetzt sind, wobei jedoch durch die Umsetzungen a) und b) insgesamt mindestens 20 % und maximal 85 % der NCO-Gruppen der ursprünglich eingesetzten Polyisocyanate umgesetzt sind,
   c) mit mindestens einer der Verbindungen der allgemeinen Formel (III"')

      Z-Q (III"')

      oder einer Verbindung der Formel (IV"')

      Z-NH-Z (IV"')

      worin Q für -OH, -NH₂, -NHR (worin R für eine Alkylgruppe mit 1 bis 4 Kohlenstoffatomen steht) oder -SH steht und jedes Z, die gleich oder verschieden sind, einen aliphatischen und/oder cycloaliphatischen und/oder aromatischen Rest mit mindestens einer sauren funktionellen Gruppierung und/oder mit mindestens einer Si(OR)ₘ(R')₃₋ₘ-Gruppe (worin R und R' Alkylgruppen mit 1 bis 10 Kohlenstoffatomen darstellen und m = 1 bis 3) darstellt oder Z-Q Mono- oder Polyhydroxyverbindungen darstellt, die eine primäre Aminogruppe enthalten,
      in einer solchen Menge umgesetzt wird, daß auf jede verbleibende in den Reaktionen a) und b) noch nicht umgesetzte Isocyanatgruppe mindestens 0,8 Moleküle der Verbindung Z-Q und/oder Z-NH-Z entfallen, und
   d) wenn das erhaltene Reaktionsprodukt nicht umgesetzte HydroxylGruppen enthält, diese Hydroxyl-Gruppen mit Polycarbonsäuren mit mindestens 2 Carboxylgruppen oder deren Anhydriden in einer solchen Menge umgesetzt werden, daß auf jede umzusetzende OH-Gruppe mindestens 0,8 Moleküle Polycarbonsäure oder Polycarbonsäureanhydrid eingesetzt wird.
Aspekt 21:
   Verfahren nach einem oder mehreren der Aspekte 1 bis 12, dadurch gekennzeichnet, daß als Dispergiermittel ein Dispergiermittel eingesetzt wird, welches erhältlich ist durch Versalzung einer aminfunktionellen Verbindung mittels einer Säure, wobei als aminofunktionelle Verbindung ein Polyamin mit zumindest drei Aminogruppen aus der Gruppe von nicht modifizierten aliphatischen linearen Polyaminen und/oder nicht modifizierten aliphatischen verzweigten Polyaminen und/oder modifizierten Polyaminen, wobei es sich bei diesen um mit Mono- oder Polyisocyanaten umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quarternisierte Polyamine und/oder mit Carbonsäuren amidierte verzweigte aliphatische Polyamine handelt, mit der Maßgabe, daß nach der Modifikation noch drei versalzbare Aminogruppen pro Molekül vorhanden sind, oder eine Mischung solcher Polyamine verwendet wird, und wobei als Säure mindestens ein Phosphorsäureester der allgemeinen Formel

   (OH)₃₋ₙPO(OR¹)ₙ mit n = 1 oder 2,

   wobei R¹ einen Alkyl-, Aryl- oder Aralkylrest mit mindestens 5 C-Atomen und/oder einen Rest eines oxyalkylierten Alkohols mit einem zahlenmittleren Molekulargewicht zwischen 100 und 5.000 g/mol und/oder einen Rest mit mindestens einer Carbonsäureestergruppe und/oder einer Urethangruppe mit einem zahlenmittleren Molekulargewicht zwischen 100 und 5.000 g/mol darstellt, verwendet wird.
Aspekt 22:
   Verfahren nach einem oder mehreren der Aspekte 1 bis 12, dadurch gekennzeichnet, daß als Dispergiermittel ein Phosphorsäureester und deren Salze der Formel (I) 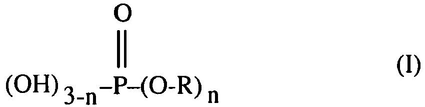 eingesetzt werden, wobei R einen mindestens ein Ethersaurestoffatom (-O-) und mindestens eine Carbonsäureestergruppe (-COOO-) und/oder Urethangruppe (-NHCOO-) enthaltenden aliphatischen, cycloaliphatischen und/oder aromatischen Rest ohne Zerewitinoff-Wasserstoff mit einem mittleren Molekulargewicht M̅ₙ von 200 bis 10.000 darstellt, wobei die Wasserstoffatome der aliphatischen Gruppen teilweise durch Halogenatome ersetzt sein können und wobei das Verhältnis der Zahl der Ethersauerstoffatome zu der Zahl der Carbonsäureestergruppen und/oder Urethangruppen in jeder Gruppe R im Bereich von 1 : 20 bis 20 : 1 vorliegt und wobei n für 1 oder 2 steht, insbesondere wobei solche Phosphorsäureester ausgenommen sind, bei denen R ein von Urethangruppen freier Monoester einer monofunktionellen Fettsäure und eines Polyols ist.
Aspekt 23:
   Verfahren nach einem oder mehreren der Aspekte 1 bis 12, dadurch gekennzeichnet, daß als Dispergiermittel ein verzweigtes Polymer eingesetzt wird, welches sich aus folgender Monomerenmischung ableitet:
   (A) 50 bis 93 Gew.-% wenigstens eines ethylenisch ungesättigten Monomers,
   (B) 2 bis 25 Gew.-% wenigstens eines ethylenisch ungesättigten Macromonomers mit einem Molekulargewicht von 1.000 bis 20.000 und
   (C) 5 bis 25 Gew.-% wenigstens eines polymerisierbaren Imidazolderivats,
   wobei die Komponenten (A), (B) und (C) zusammen 100 Gew.-% ergeben, das Polymer ein Molekulargewicht von 15.000 bis 100.000 besitzt und gegebenenfalls in Salzform vorliegt.
Aspekt 24:
   Verfahren nach einem oder mehreren der Aspekte 1 bis 12, dadurch gekennzeichnet, daß als Dispergiermittel alkoxylierte Epoxid/Amin-Addukte mit einem zahlenmitteleren Molekulargewicht von mehr als 500 g/mol eingesetzt werden, welche erhältlich sind durch die Umsetzung von
   (A) Mono- und/oder Polyepoxiden mit mindestens 8 Kohlenstoffatomen und
   (B) primären und/oder sekundären Aminen und/oder primären und/oder sekundären Alkanolamiden und/oder sekundären Alkylalkanolaminen unter Bildung eines Addukts mit einer oder mehreren sekundären OH-Gruppen
      und nachfolgende Alkoxylierung des Addukts mit
   (C) Alkylenoxiden.
Aspekt 25:
   Verfahren nach einem oder mehreren der Aspekte 1 bis 12, dadurch gekennzeichnet, daß als Dispergiermittel Additionsverbindungen eingesetzt werden, welche erhältlich sind durch Umsetzung von
   (I) mono- oder polyfunktionellen aromatischen Epoxiden mit
   (II) Polyoxyalkylenmonoaminen, die ein zahlenmittleren Molekulargewicht von mehr als 400 g/mol und eine primäre oder sekundäre Aminogruppe mit mindestens vier Ethersauerstoffen pro Molekül aufweisen,
   wobei 90 bis 100 % der Epoxidgruppen des Ausgangsmaterials umgesetzt sind, der Gewichtsanteil der Additionsverbindungen an aromatischen Gruppen nicht mehr als 50 % beträgt und die Additionsverbindungen mindestens eine versalzbare Aminogruppe pro Molekül aufweisen oder als Salz vorliegen.
Aspekt 26:
   Verfahren nach einem oder mehreren der Aspekte 1 bis 12, dadurch gekennzeichnet, daß als Dispergiermittel Copolymerisate eingesetzt werden, welche erhältlich sind durch Copolymerisation von (a) 1 bis 80 Mol-% mindestens eines ethylenisch ungesättigten 1,2-Dicarbonsäurederivats, (b) 2 bis 80 Mol-% mindestens eines ungesättigten Monocarbonsäurederivats mit 12 bis 30 Kohlenstoffatomen, (c) 1 bis 90 Mol-% mindestens eines Polyakylenoxyallylethers mit einem zahlenmittleren Molekulargewicht von bis zu 5.000 g/mol und (d) 0 bis 30 Mol-% weiterer nicht unter (a), (b) oder (c) fallender ungesättigter Monomere, gegebenenfalls gefolgt von einer Umsetzung dieser Copolymerisate mit Ammoniak, Wasser, Alkoholen, Aminoalkoholen und/oder Alkali- oder Erdalkalihydroxiden.
Aspekt 27:
   Verfahren nach einem oder mehreren der Aspekte 1 bis 12, dadurch gekennzeichnet, daß als Dispergiermittel Acrylsäurealkylesterpolymere eingesetzt werden, welche frei sind von Epoxyfunktionalität, wobei 1 bis 50 % der Estergruppen der Polymeren zu Säureamiden umgesetzt ist, wobei als Acrylsäurealkylesterpolymere erhältlich sind durch Aminolyse von Estergruppen des Polymers mittels Aminen, wobei zur Aminolyse mindestens ein Amin aus der Gruppe von (a) Aminen der allgemeinen Formel NH₂-R¹-NR²R³, wobei R¹ ein zweiwertiger Alkylenrest mit 2 bis 4 Kohlenstoffatomen ist und R² und R³ aliphatische und/oder alicyclische Alkylreste mit 1 bis 12 Kohlenstoffatomen sind, die gleich oder verschieden sein können, und (b) Aminen der allgemeinen Formel NH₂-R¹-Z, wobei R¹ ein zweiwertiger Alkylenrest mit 2 bis 4 Kohlenstoffatomen ist und Z ein 5 oder 6gliedriger N-haltiger Heterocyclus ist, der bis zu 2 Stickstoffatome oder zusätzlich Sauerstoff aufweisen kann, verwendet wird.
Aspekt 28:
   Verfahren nach einem oder mehreren der Aspekte 1 bis 12, dadurch gekennzeichnet, daß als Dispergiermittel ein Dispergiermittel der allgemeinen Formel 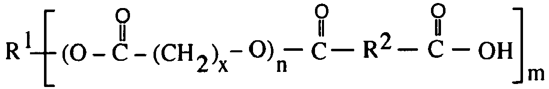 eingesetzt wird, worin
   R¹ den organischen Rest einer Verbindung mit 1 bis 3 Hydroxylgruppen pro Molekül oder den Rest eines Polysiloxans darstellt, das 1 bis 3 nicht an ein Siliciumatom gebundene Hydroxylgruppen aufweist,
   R² einen zweiwertigen, geradkettigen oder verzweigten aliphatischen oder cycloaliphatischen Rest darstellt,
   x = 2 bis 18, n = 10 bis 500 und m = 1 bis 3 ist,
   wobei das Dispergiermittel ein Molekulargewicht von 1.000 bis 20.000 g/mol und eine Säurezahl von 3 bis 180 mgKOH/g aufweist und bei Raumtemperatur fest ist.
Aspekt 29:
   Verfahren nach einem oder mehreren der Aspekte 1 bis 12, dadurch gekennzeichnet, daß als Dispergiermittel Gradientencopolymere eingesetzt werden, wobei die Gradientencopolymere durch lebende kontrollierte Polymerisation von ethylenisch ungesättigten Monomeren unter Verwendung eines monofunktionellen Initiators, der kein Polymer ist, erhältlich sind und wobei die Gradientencopolymere entlang der Polymerkette einen Übergang von hydrophilen zu hydrophoben Eigenschaften besitzen, wobei
   a) ein Monomer (I) kontinuierlich zu einem Monomer (II) unter Reaktion zugeleitet wird oder
   b) ein Monomer (I) und ein Monomer (II) mit unterschiedlichen Dosierraten kontinuierlich einem Reaktionsbehälter zur Reaktion zugeleitet werden,
   wobei entweder durch das Monomer (I) oder durch das Monomer (II) Gruppen in die Gradientencopolymere eingeführt werden, die als solche oder nach weiterer chemischer Umsetzung der Gradientencopolymere in Wechselwirkung mit den zu dispergierenden Kohlenstoffnanoröhren (CNTs) zu treten imstande sind, und durch das andere Monomer Gruppen in die Gradientencopolymere eingeführt werden, die mit der kontinuierlichen, insbesondere Dispersionsmittel verträglich sind, wobei entweder das Monomer (I) oder die Produkte aus der weiteren chemischen Umsetzung des Monomers (I) einerseits oder das Monomer (II) oder die Produkte der weiteren chemischen Umsetzung des Monomers (II) andererseits hydrophobe Eigenschaften besitzen und das jeweils andere Monomer oder die Produkte der weiteren chemischen Umsetzung des jeweils anderen Monomers hydrophile Eigenschaften besitzen,
   wobei die Eigenschaften hydrophob und hydrophil folgendermaßen definiert sind, daß hydrophile Eigenschaften bei einem Löslichkeitsparameter größer oder gleich 22 J^{1/2}/cm^{3/2} und hydrophobe Eigenschaften bei einem Löslichkeitsparameter kleiner 22 J^{1/2}/cm^{3/2} vor liegen,
   und wobei die Begriffe "Monomer (I)" und "Monomer (II)" auch Mischungen aus Monomeren (I) einerseits und Monomeren (II) andererseits umfassen.
Aspekt 30:
   Dispersionen von Kohlenstoffnanoröhren (CNTs) in einer kontinuierlichen Phase, insbesondere in mindestens einem Dispersionsmittel, erhältlich durch das Verfahren nach einem oder mehreren der vorangehenden Aspekte.
Aspekt 31:
   Dispersionen von Kohlenstoffnanoröhren (CNTs) in einer kontinuierlichen Phase, insbesondere in mindestens einem Dispersionsmittel, wobei die Kohlenstoffnanoröhren, insbesondere ohne vorangehende Vorbehandlung, in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags dispergiert worden sind.
Aspekt 32:
   Dispersionen nach einem oder mehreren der vorangehenden Aspekte, dadurch gekennzeichnet, daß die Dispersionen über mindestens 1 Woche, vorzugsweise mindestens 1 Monat, besonders bevorzugt mindestens 3 Monate, ganz besonders bevorzugt mindestens 6 Monate, lagerstabil sind und/oder daß die Dispersionen bei Raumtemperatur fließfähig sind und/oder daß die Dispersionen newtonisch oder allenfalls thixotropes und/oder strukturviskos, vorzugsweise newtonisch, sind.
Aspekt 33:
   Verwendung der Dispersionen nach einem oder mehreren der vorangehenden Aspekte im Bereich der Elektronik.
Aspekt 34:
   Verwendung nach Aspekt 33 im Bereich der Computer-, Halbleiter- und Meßtechnik und -industrie.
Aspekt 35:
   Verwendung nach Aspekt 33 oder 34 zur Herstellung von leitenden oder halbleitenden Strukturen, nanoelektrische Strukturen und Vorrichtungen, Transistoren, nichtflüchtigen Speichern, Displays und Bildschirmen und deren Komponenten sowie meßtechnischen und computertechnischen Bauteilen und Komponenten, wie Schaltkreisen, Dioden und dergleichen.
Aspekt 36:
   Verwendung der Dispersionen nach einem oder mehreren der vorangehenden Aspekte in Kunststoffen und Kunststoffmassen, Beschichtungen, Lacken, Farben und Kompositmaterialien.
Aspekt 37:
   Verwendung der Dispersionen nach einem oder mehreren der vorangehenden Aspekte zur Erhöhung der elektrischen Leitfähigkeit und/oder zur Verbesserung der mechanischen Eigenschaften, insbesondere der Festigkeit, vorzugsweise in bezug auf Kunststoffe und Kunststoffmassen, Beschichtungen, Lacken, Farben und Kompositmaterialien, vorzugsweise als Verstärkungsmaterialien.
Aspekt 38:
   Verwendung der Dispersionen nach einem oder mehreren der vorangehenden Aspekte zur Herstellung von Bündeln, Fasern, Matten und anderen zusammenhängenden Strukturen von Kohlenstoffnanoröhren (CNTs).
Aspekt 39:
   Verwendung der Dispersionen nach einem oder mehreren der vorangehenden Aspekte im Bereich der Luft- und Raumfahrttechnik.
Aspekt 40:
   Verwendung der Dispersionen nach einem oder mehreren der vorangehenden Aspekte im Bereich der Kühltechnik, insbesondere zur Herstellung von Kühlkörpern für verschiedenste Anwendungen, insbesondere für GSM-Basisstationen, als CPU-Kühler oder dergleichen.
Aspekt 41:
   Verwendung der Dispersionen nach einem oder mehreren der vorangehenden Aspekte zur Abschirmung gegen elektrische und/oder elektromagnetische Strahlung, insbesondere in bezug auf Kunststoffe und Kunststoffmassen, Beschichtungen, Lacken, Farben und Kompositmaterialien.

## Patentansprüche

1. Verfahren zum Dispergieren von Kohlenstoffnanoröhren (CNTs) in einer kontinuierlichen Phase, insbesondere in mindestens einem Dispersionsmittel,
**dadurch gekennzeichnet,**
**daß** die Kohlenstoffnanoröhren (CNTs), insbesondere ohne vorangehende Vorbehandlung, in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags dispergiert werden.

2. Verfahren nach Anspruch 1, **dadurch gekennzeichnet,**
**daß** die Kohlenstoffnanoröhren (CNTs) in Mengen von 1 • 10⁻⁵ bis 30 Gew.-%, insbesondere 1 • 10⁻⁴ bis 20 Gew.-%, vorzugsweise 1 • 10⁻³ bis 10 Gew.-%, besonders bevorzugt 1 • 10⁻² bis 7,5 Gew.-%, ganz besonders bevorzugt 1 • 10⁻¹ bis 5 Gew.-%, bezogen auf die resultierende Dispersion, in der kontinuierlichen Phase dispergiert werden; und/oder
**daß** das Dispergiermittel (Dispergator) in Mengen von 25 bis 400 Gew.-%, insbesondere 50 bis 350 Gew.-%, vorzugsweise 75 bis 300 Gew.-%, besonders bevorzugt 100 bis 275 Gew.-%, ganz besonders bevorzugt 150 bis 250 Gew.-%, bezogen auf die zu dispergierenden Kohlenstoffnanoröhren (CNTs), eingesetzt wird; und/oder
**daß** das Verfahren bzw. der Dispergiervorgang über eine Zeitdauer von 0,01 bis 30 Minuten, insbesondere 0,1 bis 20 Minuten, vorzugsweise 0,2 bis 15 Minuten, besonders bevorzugt 0,5 bis 10 Minuten, ganz besonders bevorzugt 0,5 bis 5 Minuten, durchgeführt wird; und/oder
**daß** der Energieeintrag mittels Ultraschallbehandlung erfolgt und/oder daß die eingetragene Energiemenge, berechnet als eingetragene Energie pro Menge an zu dispergierenden Kohlenstoffnanoröhren (CNTs), 5.000 bis 500.000 kJ/kg, insbesondere 10.000 bis 250.000 kJ/kg, vorzugsweise 15.000 bis 100.000 kJ/kg, besonders bevorzugt 25.000 bis 50.000 kJ/kg, beträgt.

3. Verfahren nach Anspruch 1 oder 2, **dadurch gekennzeichnet**, **dadurch gekennzeichnet,**
**daß** dem eigentlichen Dispergiervorgang ein Verfahrensschritt vorausgeht, bei dem die nachfolgend zu dispergierenden Kohlenstoffnanoröhren (CNTs) mit der kontinuierlichen Phase, insbesondere dem Dispersionsmittel, und dem Dispergiermittel sowie gegebenenfalls weiteren Bestandteilen und/oder Inhaltsstoffen der Dispersion in Kontakt gebracht und homogenisiert werden, insbesondere unter Rühren; und/oder
**daß** das Verfahren bei Temperaturen unterhalb der Siedetemperatur der kontinuierlichen Phase, insbesondere des Dispersionsmittels, durchgeführt wird, insbesondere bei Temperaturen im Bereich von 10 bis 100 °C, vorzugsweise 15 bis 70 °C, insbesondere wobei der Dispergiervorgang gegebenenfalls unter Kühlen durchgeführt wird; und/oder
**daß** der Dispergiervorgang ohne vorangehende Vorbehandlung der zu dispergierenden Kohlenstoffnanoröhren (CNTs), insbesondere ohne vorangehende Oxidation, chemische Behandlung, thermische Behandlung, Polarisierung oder Halogenierung, durchgeführt wird.

4. Verfahren nach einem oder mehreren der vorangehenden Ansprüche, **dadurch gekennzeichnet,**
● **daß** die eingesetzten Kohlenstoffnanoröhren (CNTs) aus einwandigen Kohlenstoffnanoröhren (SWCNTs bzw. SWNTs) oder mehrwandigen Kohlenstoffnanoröhren (MWCNTs bzw. MWNTs), insbesondere 2- bis 30wandigen, vorzugsweise 3- bis 15wandigen, Kohlenstoffnanoröhren, ausgewählt werden und/oder
● **daß** die eingesetzten Kohlenstoffnanoröhren (CNTs) mittlere Innendurchmesser von 0,4 bis 50 nm, insbesondere 1 bis 10 nm, vorzugsweise 2 bis 6 nm, aufweisen und/oder
● **daß** die eingesetzten Kohlenstoffnanoröhren (CNTs) mittlere Außendurchmesser von 1 bis 60 nm, insbesondere 5 bis 30 nm, vorzugsweise 10 bis 20 nm, aufweisen und/oder
● **daß** die eingesetzten Kohlenstoffnanoröhren (CNTs) mittlere Längen von 0,01 bis 1.000 µm, insbesondere 0,1 bis 500 µm, vorzugsweise 0,5 bis 200 µm, besonders bevorzugt 1 bis 100 µm, aufweisen und/oder
● **daß** die eingesetzten Kohlenstoffnanoröhren (CNTs) eine Zugfestigkeit pro Kohlenstoffnanoröhre von mindestens 1 GPa, insbesondere mindestens 5 GPa, bevorzugt mindestens 10 GPa, aufweisen und/oder
● **daß** die eingesetzten Kohlenstoffnanoröhren (CNTs) einen Elastizitätsmodul pro Kohlenstoffnanoröhre von mindestens 0,1 TPa, insbesondere mindestens 0,5 TPa, bevorzugt mindestens 1 TPa, aufweisen und/oder
● **daß** die eingesetzten Kohlenstoffnanoröhren (CNTs) eine thermische Leitfähigkeit von mindestens 500 W/mK, insbesondere mindestens 1.000 W/mK, bevorzugt mindestens 2.000 W/mK, aufweisen und/oder
● **daß** die eingesetzten Kohlenstoffnanoröhren (CNTs) eine elektrische Leitfähigkeit von mindestens 10³ S/cm, insbesondere mindestens 0,5 • 10⁴ S/cm, bevorzugt mindestens 10⁴ S/cm, aufweisen und/oder
● **daß** die eingesetzten Kohlenstoffnanoröhren (CNTs) eine Schüttdichte im Bereich von 0,01 bis 0,3 g/cm³, insbesondere 0,02 bis 0,2 g/cm³, vorzugsweise 0,1 bis 0,2 g/cm³, aufweisen.

5. Verfahren nach einem oder mehreren der vorangehenden Ansprüche, **dadurch gekennzeichnet,**
**daß** als kontinuierliche Phase, insbesondere Dispersionsmittel, ein wäßrig, organisch oder wäßrig-organisch basiertes Dispersionsmittel, bevorzugt ein organisches Dispersionsmittel, eingesetzt wird und/oder daß als kontinuierliche Phase ein unter Dispergierbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Dispersionsmittel eingesetzt wird; und/oder
**daß** als kontinuierliche Phase ein Dispersionsmittel eingesetzt wird, welches ausgewählt wird aus der Gruppe von (i) Alkoholen, insbesondere geradkettigen, verzweigten oder cyclischen, einwertigen oder mehrwertigen Alkoholen, wie Methanol, Ethanol, Butanol, Ethylhexanol, Dekanol, Isotridecylalkohol, Benzylalkohol, Propargylalkohol, Oleylalkohol, Linoleylalkohol, Oxoalkoholen, Neopentylalkohol, Cyclohexanol, Fettalkoholen und Di- und Polyolen, wie Glykolen; (ii) Etheralkoholen, wie 2-Methoxyethanol, Monophenyldiglykol, Phenylethanol, Ethylenglykol und Propylenglykol; (iii) Kohlenwasserstoffen, wie Toluol, Xylol und aliphatischen und/oder cyloaliphatischen Benzinfraktionen, chlorierten Kohlenwasserstoffen, wie Chloroform und Trichlorethan; (iv) Ethern, insbesondere cyclischen und acyclischen Ethern, wie Dioxan, Tetrahydrofuran und Polyalkylenglykoldialkylethern; (v) Carbonsäureestern, insbesondere Monocarbonsäureestem, wie Ethylacetat und Butylacetat, und Di- oder Polycarbonsäureestern, wie Dialkylestern von C₂- bis C₄-Dicarbonsäuren ("Dibasic Esters"); (vi) Etherestern, insbesondere Alkylglykolestern, wie Ethylglykolacetat und Methoxypropylacetat; (vii) Lactonen, wie Butyrolacton; (viii) Weichmachern, insbesondere Phthalaten; (ix) Aldehyden und Ketonen, wie Methylisobutylketon, Cyclohexanon und Aceton; (x) Säureamiden, wie Dimethylformamid; (xi) N-Methylpyrrolidon; sowie Mischungen der vorgenannten Dispersionsmittel; und/oder
**daß** als Dispergiermittel ein polymeres Dispergiermittel, insbesondere auf Basis eines funktionalisierten Polymers, vorzugsweise mit einer zahlenmittleren Molekularmasse von mindestens 500 g/mol, vorzugsweise mindestens 1.000 g/mol, bevorzugt mindestens 2.000 g/mol, eingesetzt wird, insbesondere wobei das Dispergiermittel ausgewählt wird aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Mischungen.

6. Dispersionen von Kohlenstoffnanoröhren (CNTs) in einer kontinuierlichen Phase, insbesondere in mindestens einem Dispersionsmittel, erhältlich durch das Verfahren nach einem oder mehreren der vorangehenden Ansprüche.

7. Dispersionen von Kohlenstoffnanoröhren (CNTs) in einer kontinuierlichen Phase, insbesondere in mindestens einem Dispersionsmittel, wobei die Kohlenstoffnanoröhren, insbesondere ohne vorangehende Vorbehandlung, in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags dispergiert worden sind.

8. Dispersionen nach einem oder mehreren der vorangehenden Ansprüche, **dadurch gekennzeichnet, daß** die Dispersionen über mindestens 1 Woche, vorzugsweise mindestens 1 Monat, besonders bevorzugt mindestens 3 Monate, ganz besonders bevorzugt mindestens 6 Monate, lagerstabil sind und/oder daß die Dispersionen bei Raumtemperatur fließfähig sind und/oder daß die Dispersionen newtonisch oder allenfalls thixotropes und/oder strukturviskos, vorzugsweise newtonisch, sind.

9. Verwendung der Dispersionen nach einem oder mehreren der vorangehenden Ansprüche im Bereich der Elektronik.

10. Verwendung nach Anspruch 9 im Bereich der Computer-, Halbleiter- und Meßtechnik und -industrie oder zur Herstellung von leitenden oder halbleitenden Strukturen, nanoelektrische Strukturen und Vorrichtungen, Transistoren, nichtflüchtigen Speichern, Displays und Bildschirmen und deren Komponenten sowie meßtechnischen und computertechnischen Bauteilen und Komponenten, wie Schaltkreisen, Dioden und dergleichen.

11. Verwendung der Dispersionen nach einem oder mehreren der vorangehenden Ansprüche in Kunststoffen und Kunststoffmassen, Beschichtungen, Lacken, Farben und Kompositmaterialien.

12. Verwendung der Dispersionen nach einem oder mehreren der vorangehenden Ansprüche zur Erhöhung der elektrischen Leitfähigkeit und/oder zur Verbesserung der mechanischen Eigenschaften, insbesondere der Festigkeit, vorzugsweise in bezug auf Kunststoffe und Kunststoffmassen, Beschichtungen, Lacken, Farben und Kompositmaterialien, vorzugsweise als Verstärkungsmaterialien.

13. Verwendung der Dispersionen nach einem oder mehreren der vorangehenden Ansprüche zur Herstellung von Bündeln, Fasern, Matten und anderen zusammenhängenden Strukturen von Kohlenstoffnanoröhren (CNTs).

14. Verwendung der Dispersionen nach einem oder mehreren der vorangehenden Ansprüche im Bereich der Luft- und Raumfahrttechnik oder im Bereich der Kühltechnik, insbesondere zur Herstellung von Kühlkörpern für verschiedenste Anwendungen, insbesondere für GSM-Basisstationen, als CPU-Kühler oder dergleichen.

15. Verwendung der Dispersionen nach einem oder mehreren der vorangehenden Ansprüche zur Abschirmung gegen elektrische und/oder elektromagnetische Strahlung, insbesondere in bezug auf Kunststoffe und Kunststoffmassen, Beschichtungen, Lacken, Farben und Kompositmaterialien.
